(19) Europäisches Patentamt
European Patent Office
Office européen des brevets

(11) EP 4 279 554 B1

(12) EUROPEAN PATENT SPECIFICATION

(45) Date of publication and mention of the grant of the patent:
**13.11.2024 Bulletin 2024/46**

(21) Application number: **22382482.2**

(22) Date of filing: **19.05.2022**

(51) International Patent Classification (IPC):
***C09D 11/52*** *(2014.01)* ***C01B 32/19*** *(2017.01)*
***H01B 1/24*** *(2006.01)*

(52) Cooperative Patent Classification (CPC):
**C09D 11/52; C01B 32/19; H01B 1/24**

(54) **METHOD FOR THE PRODUCTION OF A CONDUCTIVE GRAPHENE-BASED INK AND PRODUCT THEREOF**

VERFAHREN ZUR HERSTELLUNG EINER LEITFÄHIGEN TINTE AUF GRAPHENBASIS UND PRODUKT DARAUS

PROCÉDÉ DE PRODUCTION D'UNE ENCRE CONDUCTIVE À BASE DE GRAPHÈNE ET PRODUIT CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.11.2023 Bulletin 2023/47**

(73) Proprietor: **ASOCIACIÓN CENTRO DE INVESTIGACIÓN COOPERATIVA EN NANOCIENCIAS "CIC nanoGUNE"**
**20018 San Sebastián, Guipúzcoa (ES)**

(72) Inventors:
- **PÉREZ-JIMÉNEZ, Raúl**
  **E-20018 San Sebastián, Guipúzcoa (ES)**
- **FERNÁNDEZ-D'ARLAS BIDEGAIN, Borja**
  **E-20018 San Sebastián, Guipúzcoa (ES)**

(74) Representative: **ABG Intellectual Property Law, S.L.**
**Avenida de Burgos, 16D**
**Edificio Euromor**
**28036 Madrid (ES)**

(56) References cited:
**WO-A1-2017/035193** **WO-A2-2014/072877**
**US-A1- 2015 072 162** **US-A1- 2021 317 327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 279 554 B1

## Description

## FIELD OF THE INVENTION

The present invention relates to a method for the preparation of a graphene-based conductive ink for additive manufacturing, said method being based on the exfoliation of graphite. The invention also relates to a graphene-based conductive ink for additive manufacturing, to a method for the preparation of a substrate coated with said conductive ink and to the resulting coated substrate.

## BACKGROUND

Graphene is a material consisting of pure carbon where the carbon atoms are arranged in flat monolayers having a thickness of one atom, and whereby the carbon atoms are in the $sp^2$ hybridization state. This arrangement of the atom provides an array of interconnected $\pi$ orbitals suitable for conducting electrons in a very efficient way. Graphene is also a light material with good mechanical properties in terms of mechanical resistance. Graphene is thus of high interest as component of materials having applications in conductive materials, lightweight materials and/or mechanically resistant materials. In particular, graphene is considered as a promising material for the formulation of conductive inks for use in advanced manufacturing methods. This would allow reducing the use of metals in conductive structures, such as printed circuits and microelectronics. The substitution of metal conductive parts in such products with graphene-based materials is attractive for economical, practical and environmental reasons. Graphite, in turn, has a crystalline structure that can be regarded as piled layers of graphene, whereby the layers interact with each other through electronic interactions via the $\pi$ orbitals formed by the $sp^2$ carbon atoms in each layer. While graphite is abundant and readily accessible, it does not benefit from the same mechanical and electronic properties as graphene.

Methods for the preparation of graphene are known in the art. For instance, graphite can be exfoliated by applying an adhesive tape to graphite and pulling it away to take off a single layer of graphene. Chemical Vapour Deposition is also known in the art for the production of graphene. While providing graphene of high quality in terms of thickness of the produced graphene layer, these methods are poorly scalable at industrial scale. Other methods such as chemical exfoliation of graphite have been developed. This method presents the advantage of being scalable, at the expense of a reduced quality in the obtained graphene over the previously mentioned processes. In particular, an exfoliation process is considered to provide high quality graphene when it allows producing a material with reduced thickness, thereby benefiting from high conductivity. An alternative method consists in the reduction of graphene oxide. This method however does not achieve sufficient electrical conductivity upon chemical reduction of graphene oxide.

Methods of chemical graphite exfoliation have been reported in the art. Typically, these methods are carried out in a liquid phase consisting of an organic solvent or water combined with an interphase active material, also called agent for exfoliation, suitable for intercalating between the layers of graphene in graphite and interacting with said layers by the means of non-covalent interactions, such as hydrogen bonding, anion-$\pi$ interactions, cation-$\pi$ interactions or hydrophobic interactions. These interactions act cooperatively to extract a layer of graphene for the graphite material. Such methods typically allow forming graphene nanoflakes or nanoplatelets with reduced graphite to graphene conversion.

For instance, patent application US 2015/0072162 discloses a method for exfoliating graphite using ethyl cellulose as exfoliating agent in a weight ratio of 1 to 2 grams of ethyl cellulose to 5 grams of graphite and using a concentration of ethyl cellulose of 1% to 2% w/v. The disclosed method allows producing an ink comprising graphene with a low to medium viscosity after several iterative solvent exchange step involving an aqueous solvent. The ink for ink-jet printing applications was prepared after isolation of the graphene powder from the exfoliation process, by dissolving said powder in an organic solvent. After 10 passes of inkjet printing and annealing at high temperature, a film of about 140 nm thickness and conductivity of about $2.5 \times 10^4$ S/m was obtained. According to the authors, this level of performance is achieved thanks to the decomposition of ethyl cellulose into aromatic species during the annealing process.

Carrasco and co-workers reported in Carbon 70, 2014, 157-163, a process for graphite exfoliation using cellulose nanocrystals as exfoliating agent. The developed process uses a weight ratio of from 1:1 to 1:20 of cellulose nanocrystals to graphite, with an optimal yield of exfoliation obtained for weight ratios in the range of from 1:1 to 1:4. The disclosed method allows preparing aqueous dispersions of graphene flakes with concentrations higher than 1 mg per mL of graphene flakes. The authors are however silent about the use of cellulose nanocrystals in the preparation of inks for advanced manufacturing techniques.

Ferreira and co-workers also disclosed in Nanoscale, 2017, 9, 10219-10226 a process for graphite exfoliation using cellulose as exfoliating agent. Aqueous alkaline solutions of cellulose were used as medium for graphite exfoliation, using weight ratios of cellulose to graphite from 2:5 to 5:2. Cellulose was used in this case as an adhesive for cellulosic substrates. The authors thus report the preparation of paper-based electrodes coated with graphene obtained by exfoliation from graphite.

It is further known in the art that nanocellulose is able to stabilize solutions or dispersions of carbonaceous materials. In this regard, patent application PCT/EP2021/054774 discloses cellulose composite compositions comprising in particular cellulose nanofibers obtained by enzymatic digestion of filter paper and reduced graphene oxide, thereby providing a hybrid material suitable for biocompatible devices. The authors disclose in particular a paper composite material with a conductivity of up to 25 S/m. Said material is prepared by reduction of graphene oxide embedded in a nanocellulose-based paper.

Liu and co-workers report in Composites Part B 225 (2021) 109250 a process for the exfoliation of oxidized graphite which comprises the steps of (i) preparing a low-oxidized expanded graphite (LOEG) from graphite; (ii) mixing the LOEG with a slurry of microfibrillated cellulose in an alkaline medium; (iii) milling the mixture of step (ii) to provide a low oxidized graphene nanocellulose hybrid material in suspension. In this material a mass ratio of graphite to microfibrillated cellulose is 2:1. Films were prepared from the resulting suspension by evaporation of the supernatant. The best performing film was reported as having an in-plane conductivity of up to 5800 S/m. The disclosed method however suffers from poor scalability, as a ball milling step is required.

Xu and co-workers disclose in Nanoscale 2019, 11, 11719-11729 a method for the exfoliation of graphite using cellulose nanofibers and comprising the step of blending a mixture of graphite with cellulose nanofibers in a weight ratio of 1 gram of cellulose nanofiber to 32.8 grams of graphite with a concentration of cellulose nanofiber of 1.5 grams per liter of water. In particular, said mixture does not comprise any additional binding agent. The materials prepared from this mixture are however described as poor electric conductors and the disclosed method is described as not suitable for the preparation of electrically conductive inks. The obtained graphene flakes were majoritarily formed of a plurality of graphene layers (about 50% 3 layers and 47% multilayers). These materials are disclosed as suitable for forming nanopapers useful as moisture-responsive actuators.

From what is disclosed in the art, it derives that there is still a need for providing improved graphene-based conductive inks suitable for advanced manufacturing and methods for their preparation and use in the preparation of conductive coated substrates.

## SUMMARY OF THE INVENTION

After exhaustive research, the inventors have developed a method for the preparation of a substrate coated with a graphene-based electrical conductor, said method comprising the step of reducing the thickness of a coating on a substrate, said coating being the result of a coating step with an ink comprising graphite exfoliated with an agent for exfoliation and a binder, thereby leading to the formation of a thin film of said ink. The inventors have found that the combination of an agent for exfoliation as described herein and a binder in a graphite-based ink according to the invention allows a two-steps graphite exfoliation process. A first step of graphite exfoliation is promoted by the agent for exfoliation in solution, leading to the formation of graphene nanoflakes. As known in the art, said graphene nanoflakes are poorly conductive materials. It is believed that the aforementioned step of thickness reduction of a coating comprising said ink promotes a second exfoliation step of the graphene nanoflakes formed in solution, which results in the improved conductivity of the film. This second exfoliation step takes place once the ink of the invention has been transferred on the surface of the substrate, in particular when the thickness of the resulting coating is reduced in a compression step. The binding agent comprised in the ink composition is necessary to maintain the coating composition well-adhered to the substrate during this second exfoliation step. In addition, it is believed that the solvent, the agent for exfoliation and the binding agent interact at the supramolecular level with each other and with the graphene nanoflakes to provide a cohesive ink composition with sufficient viscosity for applications in advanced manufacturing techniques. The method of the invention thus requires the use of an ink comprising exfoliated graphite and a binding agent, whereby the graphite is exfoliated by the intervention of an exfoliating agent that is selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof. The amount of exfoliating agent, and more particularly, the ratio of agent for exfoliation to graphite, is an essential feature of the invention, because, on the one hand, an excessive amount of agent for exfoliation will cause the conductivity of the final material to decrease and, on the other hand, too small an amount of agent for exfoliation will lead to a non-efficient exfoliation of graphite, which will result in a poor conductivity. The agent for exfoliation used in the invention advantageously further allows to stabilize the graphene nanoflakes and nanoplatelets in solution formed through the exfoliation of graphite. In addition, the agent for exfoliation further enhances the adhesion of the ink to the substrate. The binding agent is also an essential aspect of the invention as it ensures the adhesion of the ink to the substrate during the second exfoliation step associated to the shear between the graphene platelets formed via the first exfoliation induced by the agent for exfoliation when the ink is deposited on a substrate. The further reduction of the thickness of the coating formed by said deposited ink provides a highly conductive coated substrate.

Thus, in a first aspect, the invention relates to a method for the production of an ink for forming a conductive coating comprising the steps of:

(i) providing a mixture comprising graphite, an agent for exfoliation and a first polar solvent, wherein:

- the agent for exfoliation is selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin tannins and mixtures thereof; and
- the weight ratio of agent for exfoliation to graphite is comprised from 1:100 to 1:20;

(ii) homogenising the mixture provided in step (i);
(iii) adding to the mixture resulting from step (ii) a binder that is different from the agent for exfoliation, wherein said binder is selected from the group consisting of polyaniline and a water soluble polysaccharide having a degree of polymerization higher than 5 and optionally substituted at any available position with one or more radicals independently selected from the group consisting of ($C_1$-$C_6$)alkyl, ($C_1$-$C_6$)alkylcarbonyl and ($C_1$-$C_6$)alkyl-$CO_2H$,; and wherein said binder is in an amount such that the weight ratio of binder to agent for exfoliation is comprised from 4:1 to 1:2;
(iv) adding to the mixture resulting from step (iii) a second polar protic solvent having a boiling point equal to or higher than the first polar solvent provided in step (i); and
(v) removing substantially all the first polar solvent provided in step (i) while leaving substantially all the second polar protic solvent added in step (iv).

A second aspect of the invention thus relates to an ink composition for forming a conductive coating comprising:

- a solvent,
- a carbonaceous material consisting of one or more of graphene, exfoliated graphite and a mixture thereof with graphite;
- an agent for exfoliation selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof; and
- a binder selected from the group consisting of polyaniline and a water soluble polysaccharide having a degree of polymerization higher than 5 and optionally substituted at any available position with one or more radicals independently selected from the group consisting of ($C_1$-$C_6$)alkyl, ($C_1$-$C_6$)alkylcarbonyl and ($C_1$-$C_6$)alkyl-$CO_2H$,

wherein the binder and the agent for exfoliation are different and wherein the agent for exfoliation is in an amount such that the weight ratio of agent for exfoliation to the carbonaceous material is comprised from 1:100 to 1:20 and wherein the binder is in an amount such that the weight ratio of binder to agent for exfoliation is comprised from 4:1 to 1:2.
A third aspect of the invention relates to an ink composition obtained according to the method of the first aspect of the invention.
As defined above, the ink of the second and third aspects of the invention are useful in the preparation of conductive coatings. Consequently, a fourth aspect of the invention relates to a method for the preparation of a conductive coated substrate comprising the steps of:

(i) providing a substrate for receiving a conductive ink for coating;
(ii) providing an ink composition as defined in the second or third aspect of the invention;
(iii) depositing the ink provided in step (ii) on the substrate provided in step (i);
(iv) drying the ink deposited in step (iii) so as to form a film of said dried ink;
(v) reducing the thickness of the film resulting from step (iv) until reaching a film thickness of less than 50% the thickness of the film resulting from step (iv) and, optionally, repeating steps (iii) to (v).

A fifth aspect of the invention relates to a coated substrate composition obtained according to the method of the fourth aspect of the invention.
A sixth aspect of the invention also relates to a coated substrate wherein the coating comprises a carbonaceous material consisting of one or more of graphene, exfoliated graphite and a mixture thereof with graphite; an agent for exfoliation selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof; and a binder selected from the group consisting of polyaniline, selected from the group consisting of polyaniline and a water soluble polysaccharide having a degree of polymerization higher than 5 and optionally substituted at any available position with one or more radicals independently selected from the group consisting of ($C_1$-$C_6$)alkyl, ($C_1$-$C_6$)alkylcarbonyl and ($C_1$-$C_6$)alkyl-$CO_2H$, wherein the binder and the agent for exfoliation are different and wherein the agent for exfoliation is in an amount such that the weight ratio of agent for exfoliation to the carbonaceous material is comprised from 1:100 to 1:20 and wherein the binder is in an amount such that the weight

ratio of binder to agent for exfoliation is comprised from 4:1 to 1:2.

## BRIEF DESCRIPTION OF THE DRAWINGS

Fig. 1 describes a method according to the present invention comprising the steps of: (A) providing a mixture comprising graphite (2), an agent for exfoliation (1) and a first polar solvent; the step (a) of homogenizing said mixture, thereby producing exfoliated graphite (3); the step (b) of adding a second polar protic solvent and a binder followed by substantial evaporation of the first solvent; thereby producing an ink (4); (B) transferring the ink (4) comprising exfoliated graphite (3) onto a substrate; the step (c) of producing a film (6) on said substrate with the deposited ink via shearing with a spatula or doctor blade (5) followed by drying; (C) the step of compressing the produced film (6) thereby forming a conductive coating (7).

Fig. 2 describes the concentration of graphene and/or exfoliated graphite, as measured by UV-Vis spectroscopy at 660 nm, in function of the concentration of agent for exfoliation of a mixture comprising graphite and (top) lignosulfonate as agent for exfoliation or (bottom) cellulose nanocrystals as exfoliating agent (square symbols) or carboxymethylcellulose as exfoliating agent (circle symbols, comparative example).

Fig. 3 describes (left) the ink according to the second or third aspect of the invention that is ink E and (right) a substrate made of paper coated by screen printing according to Method B described below with the ink E according to the second or third aspect of the invention.

Fig. 4 describes (top) picture of a paper substrate coated with ink C according to the present invention before and after the step of reducing the thickness of the film formed in the method of the fourth aspect of the invention and (bottom) pictures made by microscope of a paper substrate coated with ink C according to the present invention before and after the step of reducing the thickness of the film formed in the method of the fourth aspect of the invention.

Fig. 5 describes (right y axis, undashed bar) the surface resistivity (expressed in ohm per square) of a film formed according to the method of the fourth aspect of the invention before and after the step of thickness reduction and (left y axis, dashed bar) the thickness (expressed in $\mu$m) of a film formed according to the method of the fourth aspect of the invention before and after the step of thickness reduction using ink A as described below.

Fig. 6 describes the evolution of the surface resistivity (expressed in ohm per square) of a sheet of paper coated with an ink according to the fourth aspect of the invention, whereby the ink is prepared using cellulose nanocrystals obtained by enzymatic digestion of filter paper as agent for exfoliation (ink E, square symbol) or using commercial cellulose nanocrystals (ink C, circle symbol) in function of the thickness of said coating.

Fig. 7 describes A) the evolution of the surface resistivity (expressed in ohm per square) of a sheet of paper coated with an ink according to the fourth aspect of the invention, whereby the ink is prepared using cellulose nanocrystals obtained by enzymatic digestion of filter paper as agent for exfoliation (ink E) after one printing pass, as a function of current values, said resistivity being measured at contact with the surface (white squares) or after indentation (black squares); grey circle provide similar data for aluminium, provided for the purpose of comparison; B) the evolution of the surface resistivity (expressed in ohm per square) of a sheet of paper coated with an ink according to the fourth aspect of the invention, whereby the ink is prepared using cellulose nanocrystals obtained by enzymatic digestion of filter paper as agent for exfoliation (ink E) as a function of the number of printing passes (1, 3 or 5) at different current values (a: 10 mA, b: 20 mA, c: 70 mA), said resistivity being measured at contact with the surface. Data for aluminium are also provided for comparison purposes.

Fig. 8 describes A) a picture of an ink according to the second or third aspect of the invention but not comprising any binder that is the Blank ink of Table 1 (Comparative example) deposited on a sheet of paper, and B) a picture of ink E (Comparative example) deposited on a sheet of paper

Fig. 9 describes a picture of a coated substrate according to the fifth aspect of the invention, whereby the substrate is paper (left) or plastic (polyethylene terephthalate, right) and the ink is ink C.

## DETAILED DESCRIPTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end-points of the range. Ranges given, such as temperatures, times, molar ratio, volume ratio and the like, should be considered approximate (i.e. with a 5% margin of variation around indicated point), unless specifically stated.

The term "polysaccharide" refers to a molecule comprising a plurality of repeating units deriving from monosaccharide building blocks and connected via glycosidic bonds. The number of monosaccharide repeating units comprised in the polysaccharide compound is also referred to herein as "degree of polymerization" Examples of polysaccharides include, among others, arabinoxylans, callose, cellulose, hemicellulose, chitin, chitosan, alginic acid, alkaline salts of alginate, pectin, and agarose. In the context of the invention, it is contemplated that polysaccharide compounds may be functionalized with one or more functional groups such as ($C_1$-$C_6$)alkyl, ($C_1$-$C_6$)alkylcarbonyl and ($C_1$-$C_6$)alkyl-$CO_2H$.

The term cellulose refers to homopolymers of β-glucose.

The three main types of nanocellulose are cellulose nanofibers, cellulose nanocrystals, and bacterial cellulose. Bacterial cellulose may be the result of enzymatic digestion of paper, using for instance ancestral endoglucanase enzymes, as described for instance in Barruetabeña et al. Comm. Chem. 2:76, 2019 (p. 10-11) and Alonso-Lerma et al. Commun. Mater. 1:57, 2020. Bacterial cellulose may consist of a mixture of cellulose nanofibers and cellulose nanocrystals. In the context of the present invention, unless otherwise stated, nanocellulose is a general term comprising cellulose nanofibers, cellulose nanocrystals or a mixture of both.

However, the terms nanofibrillated cellulose, nanofibrillar cellulose, nanofibers, nanofibrils, cellulose nanofibrils, and cellulose nanofibers seem to be used interchangeably in the literature, including as synonyms of microfibrillated cellulose, microfibers, and microfibrils (MFC). Cellulose nanofibers are thin fibers longer than cellulose nanocrystals with lengths of up to several micrometers. In the context of the present invention, the term "cellulose nanofiber" refers to a fiber of cellulose having a thickness or diameter in the nanometer range, which is from 1 to 1000 nm. Typically, cellulose nanofibers have lengths of from 1 μm to 10 μm and diameters (also identified as widths) of from 5 nm to 60 nm. Cellulose nanofibers differ with regards to cellulose nanocrystals in at least the length to width aspect ratio (length/diameter).

Cellulose nanocrystals (cellulose nanocrystals, also called nanowhiskers) are needlelike crystalline particles with lengths of hundreds of nanometers depending on their source and isolation treatment. Cellulose nanocrystals have higher mechanical stability in comparison with cellulose nanofibers due to their crystalline structure. Cellulose nanocrystals have high surface areas and tensile strength that can be compared with other materials such as Kevlar or carbon nanotubes. In the context of the present invention, the term "cellulose nanocrystal" refers to a particle of cellulose having a thickness or diameter and, for non-spherical particles, the length, in the nanometer range, that is from 1 to 1000 nm. Cellulose nanocrystals have more particularly an average diameter (also identified as width) between 2-60 nm and a length of 10 nm to 2 μm, depending on the cellulose source and the isolation treatment. The diameter and length of the cellulose nanocrystals and/or cellulose nanofibers can be calculated using any suitable technique known by the skilled person, for example, by atomic force microscopy (AFM).

The term "chitin", as used herein, relates to a β(1-4) polymer of N-acetyl-D-glucosamine. Chitin is a linear, highly crystalline homo polymer of β-1,4 N-acetyl glucosamine (GlcNAc), that consists of β-1,4-linked N-acetyl glucosamine residues that are arranged in antiparallel (α), parallel (β) or mixed (γ, two parallel strands alternate with a single anti-parallel strand) strands, with the (α) configuration being the most abundant. The repeating unit of chitin is represented by the following formula:

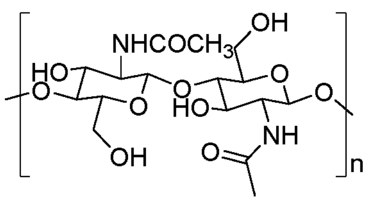

In the context of the present invention, the term "chitin nanofiber" refers to a fiber of chitin having a thickness or diameter in the nanometer range that is from 1 to 1000 nm. Typically, chitin nanofibers have lengths of from 1 μm to 10 μm and diameters (also identified as widths) of from 5 nm to 60 nm. Chitin nanofibers differ with regards to chitin nanocrystals in at least the length to width aspect ratio (length/diameter). In the context of the present invention, the term "chitin nanocrystal" refers to a particle of chitin having a thickness or diameter and, for non-spherical particles, the length, in the nanometer range, that is from 1 to 1000 nm. Chitin nanocrystals have more particularly an average diameter (also identified as width) between 2-60 nm and a length of 10 nm to 2 μm, depending on the chitin source and the isolation treatment. The diameter and length of the chitin nanocrystals and/or chitin nanofibers can be calculated using any suitable technique known by the skilled person, for example, by atomic force microscopy (AFM). Nanocrystals and nanofibers of chitin may be obtained by enzymatic digestion of chitin, as reviewed by Lin et al "Preparation, properties and applications of polysaccharide nanocrystals in advanced functional nanomaterials: a review" Nanoscale 4, 3274-3294 (2012).

In the context of the invention, the term "lignosulfonate" refers to a sulfonated lignin compound resulting from the production of wood pulp using sulfite pulping. Lignosulfonates are water soluble anionic polyelectrolyte polymers

having a repeating unit comprising in its molecular formula the fragment of formula

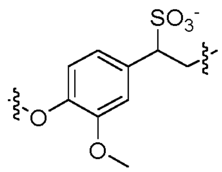

Lignosulfonate compounds are well known in the art and are typically found in the form of salts with cations derived from alkaline or alkaline earth metals.

In the context of the invention, the term "hemicellulose" refers to a polysaccharide formed from at least two different sugar repeating units linked by bonds β 1-4, such as xylose, arabinose, galactose, glucose, glucuronic acid and mannose. Typically, hemicellulose nanofibers have lengths of from 1 μm to 10 μm and diameters (also identified as widths) of from 5 nm to 60 nm. Hemicellulose nanofibers differ with regards to hemicellulose nanocrystals in at least the length to width aspect ratio (length/diameter). In the context of the present invention, the term "hemicellulose nanocrystal" refers to a particle of hemicellulose having a thickness or diameter and, for non-spherical particles, the length, in the nanometer range, that is from 1 to 1000 nm. Hemicellulose nanocrystals have more particularly an average diameter (also identified as width) between 2-60 nm and a length of 10 nm to 2 μm, depending on the hemicellulose source and the isolation treatment. The diameter and length of the hemicellulose nanocrystals and/or hemicellulose nanofibers can be calculated using any suitable technique known by the skilled person, for example, by atomic force microscopy (AFM).

Arabinoxylans are an example of hemicellulose compounds, being polysaccharides comprising copolymers of arabinose and xylose.

The term "chitosan", as used herein, relates to a derivative of chitin obtained by deacetylation of chitin in the solid state under alkaline conditions (such as concentrated NaOH) or by enzymatic hydrolysis in the presence of a chitin deacetylase. It is a linear polysaccharide composed of randomly distributed β-(1-4)-linked D-glucosamine (deacetylated unit) and N-acetyl-D-glucosamine (acetylated unit), characterized by its average molecular weight and its degree of acetylation (proportion of acetylated glucosamine units along the polymer backbone). Chitosan is represented by the following general formula:

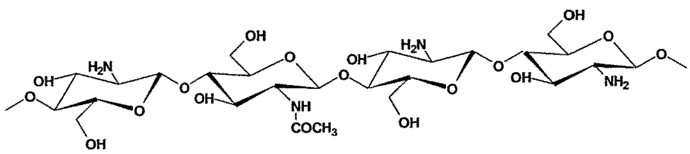

Chitosan derivatives according to the invention include, without limitation, PEG-chitosan (copolymer), chitosan azide, N-phthaloyl chitosan, chitosan-C(6)-MPEG (copolymer), chitosan adipate, chitosan fumarate, chitosan lactate, chitosan acetate, chitosan hydrochloride, carboxymethylchitosan, N-sulfonato-N,O-carboxymethylchitosan, chitosan ascorbate, chitosan malate, chitosan glutamate, trimethyl chitosan (TMC), aryl chitosan, thiolated chitosan, N-succinyl-chitosan (Suc-Chi), thiosemicarbazone chitosans, N,O-carboxymethylchitosan(NOCC) and hydroxyl propylatedchitosan(HPC), N-trimethylene chloride chitosan), chitosan phthalate, and trimethyl ammonium chitosan. Chitosan derivatives can be obtained from the chitosan according to the present invention by methods known by the skilled person.

As used herein, the term "lignin" refers to a phenylpropane polymer of monolignol monomers (p-coumaryl alcohol, coniferyl alcohol, and sinapyl alcohol) found as an integral part of the secondary cell walls of plants and certain types of algae. Lignin may also refer to any lignin derivatives such as esters, amides, ethers, carboxylic acids and salts thereof that derive from the natural products or the modification of the naturally obtained lignin material. The term "lignin" also refers to alkaline salts of said compounds.

The term "tannin" is known in the art and refers to large polyphenolic compound containing sufficient hydroxyls and other suitable groups (such as carboxyls) to form strong complexes with various macromolecules. Tannin may also refer to any tannin derivatives such as esters, amides, ethers, carboxylic acids and salts thereof that derive from the natural products or the modification of the naturally obtained tannin material. Illustrative genera of shrubs and/or trees from which suitable tannins can be derived can include, but are not limited to, Acacia, Castanea, VachelUa, Senegalia, Terminalia, Phyllanthus, Caesalpinia, Quercus, Schinopsis, Tsuga, Rhus, Juglans, Carya, and Pinus, any combination thereof, or any mixture thereof. Suitable tannins include, for instance, and in a non-limiting manner tannic acid, with CAS number 1401-55-4, and salts thereof, such as alkaline salts.

Callose is a plant polysaccharide composed of glucose residues linked together through β-1,3-linkages, and

is of general formula

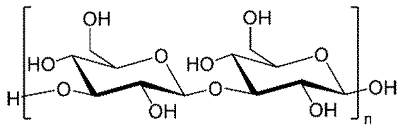

Alginic acid is a linear copolymer with homopolymeric blocks of (1→4)-linked β-D-mannuronate (M) and α-L-guluronate (G) residues, respectively, covalently linked together in different sequences or blocks. The monomers may appear in homopolymeric blocks of consecutive G-residues (G-blocks), consecutive M-residues (M-blocks) or alternating M and G-residues (MG-blocks). Thus, alginic acid has the general formula:

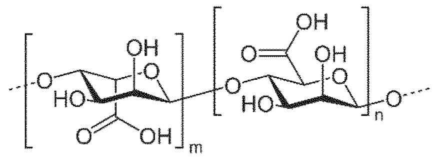

As known in the art, the term "pectin" refers to a heteropolysaccharide compound known in the art, consisting in particular in a main chain consisting of optionally esterified D-galacturonic acid in an alpha 1-4 chain configuration, and optionally having other sugar compounds as side chain. The acid groups along the chain of D-galacturonic acid repeating units are largely esterifed with methoxy groups in the natural product. There can also be acetyl groups present on the free hydroxy groups.

As known in the art, starch is a polysaccharide comprising glucose monomers joined in α-1,4 linkages. The simplest form of starch is the linear polymer amylose; amylopectin is the branched form. Typically, starch nanofibers have lengths of from 1 μm to 10 μm and diameters (also identified as widths) of from 5 nm to 60 nm. Starch nanofibers differ with regards to starch nanocrystals in at least the length to width aspect ratio (length/diameter). In the context of the present invention, the term "starch nanocrystal" refers to a particle of starch having a thickness or diameter and, for non-spherical particles, the length, in the nanometer range, that is from 1 to 1000 nm. Starch nanocrystals have more particularly an average diameter (also identified as width) between 2-60 nm and a length of 10 nm to 2 μm, depending on the starch source and the isolation treatment. The diameter and length of the starch nanocrystals and/or starch nanofibers can be calculated using any suitable technique known by the skilled person, for example, by atomic force microscopy (AFM). Nanocrystals and nanofibers of starch may be obtained by enzymatic digestion of starch, as reviewed by Lin et al "Preparation, properties and applications of polysaccharide nanocrystals in advanced functional nanomaterials: a review" Nanoscale 4, 3274-3294 (2012).

As known in the art, the term "agarose" refers to a polysaccharide, made up of the repeating unit of agarobiose, which is a disaccharide made up of D-galactose and 3,6-anhydro-L-galactopyranose, of formula:

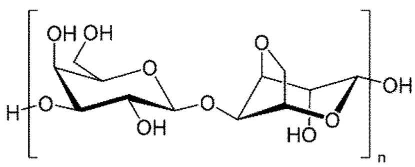

In the context of the invention, a mixture of component is said to be "homogenized" when the components forming the mixture are distributed in a substantially even manner within the mixture.

As defined above, a first aspect of the invention relates to a method for the production of an ink for forming a conductive coating comprising the steps of:

(i) providing a mixture comprising graphite, an agent for exfoliation and a first polar solvent, wherein:

- the agent for exfoliation is selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof; and
- the weight ratio of agent for exfoliation to graphite is comprised from 1:100 to 1:20;

(ii) homogenising the mixture provided in step (i);

(iii) adding to the mixture resulting from step (ii) a binder that is different from the agent for exfoliation, wherein said binder is selected from the group consisting of polyaniline and a water soluble polysaccharide having a degree of polymerization higher than 5 and optionally substituted at any available position with one or more radicals independently selected from the group consisting of ($C_1$-$C_6$)alkyl, ($C_1$-$C_6$)alkylcarbonyl and ($C_1$-$C_6$)alkyl-$CO_2H$; and wherein the binder is in an amount such that the weight ratio of binder to agent for exfoliation is comprised from 4:1 to 1:2;

(iv) adding to the mixture resulting from step (iii) a second polar protic solvent having a boiling point equal to or higher than the first polar solvent provided in step (i); and

(v) removing substantially all the first polar solvent provided in step (i) while leaving substantially all the second polar protic solvent added in step (iv).

In a preferred embodiment of the first aspect of the invention, the first polar solvent of the mixture of step (i) is selected from the group consisting of water, methanol, ethanol, propanol, isopropanol, butanol, *tert*-butanol, acetone, methyl ethyl ketone, 3-pentanone, 2-pentanone and mixtures thereof.

In another preferred embodiment of the first aspect of the invention, the first polar solvent of the mixture of step (i) is selected from the group consisting of water, methanol, ethanol, propanol, isopropanol, butanol, *tert*-butanol and mixtures thereof.

In another more preferred embodiment of the first aspect of the invention, the first polar solvent is a mixture of water and isopropanol; preferably in a 1:1 volume ratio.

In another preferred embodiment of the first aspect of the invention, the graphite of the mixture of step (i) is selected from the group consisting of synthetic graphite powder, natural graphite flakes, natural graphite powders and mixtures thereof; preferably it is synthetic graphite powder.

In another preferred embodiment of the first aspect of the invention, the graphite of the mixture of step (i) has a particle size of less than 30 $\mu$m.

In another preferred embodiment of the first aspect of the invention, the agent for exfoliation of the mixture of step (i) is selected from the group consisting of lignosulfonate, cellulose nanocrystals, cellulose nanofibers and a mixture thereof.

In another preferred embodiment of the first aspect of the invention, the agent for exfoliation of the mixture of step (i) is selected from the groups consisting of cellulose nanocrystals, cellulose nanofibers and a mixture thereof.

In another preferred embodiment of the first aspect of the invention, the agent for exfoliation of the mixture of step (i) is cellulose nanofiber or cellulose nanocrystal having an average length of between 100 and 1500 nm and a diameter of between 10 and 20 nm.

In another preferred embodiment of the first aspect of the invention, the agent for exfoliation of the mixture of step (i) is cellulose nanofiber or cellulose nanocrystal obtained by enzymatic digestion of filter paper; preferably by digestion of filter paper mediated by one of endoglucanase, cellobiohydrolase, and $\beta$-glucosidase optionally linked to a carbohydrate binding module; more preferably by digestion of filter paper mediated by endoglucanase associated to the last firmicute common ancestor optionally linked to a carbohydrate binding module. Such methods of enzymatic digestion are known in the art and have been disclosed in Alonso-Lerma, B., Barandiaran, L., Ugarte, L. et al. High performance crystalline nanocellulose using an ancestral endoglucanase. Commun Mater 1, 57 (2020), page 8 (Methods section).

In another preferred embodiment of the first aspect of the invention, the agent for exfoliation of the mixture of step (i) is cellulose nanocrystals obtained by acidic treatment of cellulose.

In another preferred embodiment of the first aspect of the invention, the weight ratio of agent for exfoliation to graphite is comprised from 1:90 to 1:30. In certain particular embodiments, the weight ratio of agent for exfoliation to graphite is comprised from 1:40 to 1:30, preferably from 1:32 to 1:30.

In another preferred embodiment of the first aspect of the invention, the agent for exfoliation is in a concentration of from 100 mg per liter of solvent to 10 gram per liter of solvent in the mixture of step (i); preferably of 1 g per liter of solvent to 5 grams per liter of solvent. In certain embodiments, the agent for exfoliation is in a concentration of from 2 g per liter of solvent to 2.5 grams per liter of solvent.

In another preferred embodiment of the first aspect of the invention, step (ii) is carried out by sonicating with a mild bath or a tip or by shear mixing the mixture of step (i).

In another preferred embodiment of the first aspect of the invention, step (ii) is carried out by sonicating with a mild bath.

In another preferred embodiment of the first aspect of the invention, the binder of step (iii) is selected from the group consisting of polyaniline, arabinoxylans, callose, cellulose, chitin, chitosan, alginic acid, alkaline salts of alginate, pectin, agarose and a mixture thereof, wherein the available hydroxyl and amino groups in each of arabinoxylans, callose, cellulose, chitin, chitosan, pectin and agarose are optionally substituted with a radical selected from the group consisting of ($C_1$-$C_6$)alkyl, ($C_1$-$C_6$)alkylcarbonyl and ($C_1$-$C_6$)alkyl-$CO_2H$.

In another preferred embodiment of the first aspect of the invention, the binder of step (iii) is selected from the

group consisting of polyaniline, cellulose, chitin, chitosan, alginic acid, alkaline salts of alginate, agarose and a mixture thereof, wherein the available hydroxyl and amino groups in each of cellulose, chitin, chitosan and agarose are optionally substituted with a radical selected from the group consisting of ($C_1$-$C_6$)alkyl, ($C_1$-$C_6$)alkylcarbonyl and ($C_1$-$C_6$)alkyl-$CO_2H$.

In another preferred embodiment of the first aspect of the invention, the binder of step (iii) is selected from the group consisting of polyaniline and cellulose wherein the available hydroxyl in cellulose are optionally substituted with a radical selected from the group consisting of ($C_1$-$C_6$)alkyl, ($C_1$-$C_6$)alkylcarbonyl and ($C_1$-$C_6$)alkyl-$CO_2H$.

In another preferred embodiment of the first aspect of the invention, the binder of step (iii) is selected from the group consisting of carboxymethylcellulose, polyaniline and mixtures thereof; preferably it is carboxymethylcellulose. Carboxymethylcellulose is cellulose wherein at least one of the hydroxyl groups of the repeating unit of cellulose is substituted with a $-CH_2CO_2H$ group.

In another preferred embodiment of the first aspect of the invention, the binder of step (iii) is in an amount such that the weight ratio of binder to agent for exfoliation is comprised from 2:1 to 1:2; preferably from 3:2 to 2:3.

In another preferred embodiment of the first aspect of the invention, the second polar solvent of step (iv) is selected from the group consisting of water, 1,2-propanodiol, glycerol, diethylene glycol, 1 ,2-ethanodiol, terpineol and mixtures thereof.

In another preferred embodiment of the first aspect of the invention, the second polar solvent of step (iv) is 1,2-propanodiol or water.

In another preferred embodiment of the first aspect of the invention, the second polar solvent of step (iv) is 1,2-propanodiol.

In another preferred embodiment of the first aspect of the invention, the second polar solvent of step (iv) is 1,2-propanodiol in an amount such that the volume ratio 1,2-propanodiol to the first polar solvent provided in step (i) is from 1:5 to 1:10; preferably it is of 1:8. This advantageously allows producing inks with high viscosity.

In another preferred embodiment of the first aspect of the invention, the second polar solvent of step (iv) is in an amount such that the volume ratio of said second polar protic solvent to the first polar solvent provided in step (i) is from 1:5 to 1:10.

In another preferred embodiment of the first aspect of the invention, the second polar solvent of step (iv) and the first polar solvent of step (i) are the same solvent. In such embodiment, step (v) is a concentration step in a manner that the volume of solvent remaining after the concentration step is from is from 0.1 to 0.2 the volume of solvent prior to step (v); preferably it is 0.125 times the volume of solvent prior to step (v).

In another preferred embodiment of the first aspect of the invention, step (v) is carried out by heating and/or by applying vacuum.

In another preferred embodiment of the first aspect of the invention, step (v) is carried out by heating at a temperature of 100 °C.

As defined above, a second aspect of the invention relates to an ink composition for forming a conductive coating comprising:

- a solvent,
- a carbonaceous material consisting of one or more of graphene, exfoliated graphite and a mixture thereof with graphite;
- an agent for exfoliation selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof; and
- a binder selected from the group consisting of polyaniline and a water soluble polysaccharide having a degree of polymerization higher than 5 and optionally substituted at any available position with one or more radicals independently selected from the group consisting of ($C_1$-$C_6$)alkyl, ($C_1$-$C_6$)alkylcarbonyl and ($C_1$-$C_6$)alkyl-$CO_2H$,

wherein the binder and the agent for exfoliation are different and wherein the agent for exfoliation is in an amount such that the weight ratio of agent for exfoliation to the carbonaceous material is comprised from 1:100 to 1:20 and wherein the binder is in an amount such that the weight ratio of binder to agent for exfoliation is comprised from 4:1 to 1:2.

In a preferred embodiment of the second aspect of the invention, the ink composition comprises from 85% to 98% in weight of the carbonaceous material, whereby the percentages in weight are expressed in relation to the sum of the weights of the carbonaceous material, the agent for exfoliation and the binder.

In a preferred embodiment of the second aspect of the invention, the ink composition comprises from 90% to 98% in weight of the carbonaceous material, whereby the percentages in weight are expressed in relation to the sum of the weights of the carbonaceous material, the agent for exfoliation and the binder.

In a preferred embodiment of the second aspect of the invention, the ink composition comprises from 92% to 98% in weight of the carbonaceous material, whereby the percentages in weight are expressed in relation to the sum of the weights of the carbonaceous material, the agent for exfoliation and the binder.

In a preferred embodiment of the second aspect of the invention, the ink composition comprises a solvent that is a polar protic solvent; preferably, the solvent is a solvent S or an azeotropic mixture of said solvent S with a solvent selected from the group consisting of water, methanol, ethanol, propanol, isopropanol, butanol, *tert*-butanol, acetone, methyl ethyl ketone, 3-pentanone, 2-pentanone and mixtures thereof, wherein S is selected from the group consisting of water, 1,2-propanodiol, glycerol, diethylene glycol, 1,2-ethanodiol, terpineol and mixtures thereof.

In a more preferred embodiment of the second aspect of the invention, the ink composition comprises a solvent that is a polar protic solvent; preferably, the solvent is a solvent S or an azeotropic mixture of said solvent S with a solvent selected from the group consisting of water, methanol, ethanol, propanol, isopropanol, butanol, *tert*-butanol and mixtures thereof, wherein S is selected from the group consisting of water, 1,2-propanodiol, glycerol, diethylene glycol, 1,2-ethanodiol, terpineol and mixtures thereof.

In a more preferred embodiment of the second aspect of the invention, the ink composition comprises a solvent that is a polar protic solvent; preferably, the solvent is a solvent S or an azeotropic mixture of said solvent S with a solvent that is a mixture of water and isopropanol; preferably in a 1:1 volume ratio; wherein S is selected from the group consisting of water, 1,2-propanodiol, glycerol, diethylene glycol, 1,2-ethanodiol, terpineol and mixtures thereof.

In a more preferred embodiment of the second aspect of the invention, the ink composition comprises a solvent that is a polar protic solvent; preferably, the solvent is a solvent S or an azeotropic mixture of said solvent S with a solvent that is a mixture of water and isopropanol; preferably in a 1:1 volume ratio; wherein S is 1,2-propanodiol.

In a preferred embodiment of the second aspect of the invention, the ink composition comprises a solvent that 1,2-propanodiol or an azeotropic mixture thereof with water and/or isopropanol.

In a preferred embodiment of the second aspect of the invention, the ink composition comprises a carbonaceous material consisting of a mixture of exfoliated graphite with graphite; said graphite being preferably synthetic graphite powder. The carbonaceous material of the ink composition of the second aspect of the invention is the result of the effect of an agent for exfoliation as defined in the first aspect of the invention on a suspension of graphite. When the exfoliation is total, the carbonaceous material of the second aspect of the invention may consist of graphene flake, exfoliated graphite and a mixture thereof. When the exfoliation is partial, i.e. when not all the graphite is exfoliated, the carbonaceous material of the second aspect of the invention may consist of a mixture of graphite with graphene flake and/or exfoliated graphite.

In a preferred embodiment of the second aspect of the invention, the ink composition comprises an agent for exfoliation as defined in any of the preferred embodiments of the first aspect of the invention.

In a preferred embodiment of the second aspect of the invention, the ink composition comprises a binder as defined in any of the preferred embodiments of the first aspect of the invention.

In a preferred embodiment of the second aspect of the invention, the ink composition is one wherein the weight ratio of agent for exfoliation to graphite is comprised from 1:90 to 1:30. In certain particular embodiments, the weight ratio of agent for exfoliation to graphite is comprised from 1:40 to 1:30, preferably from 1:32 to 1:30.

In a preferred embodiment of the second aspect of the invention, the ink composition is one wherein the binder is in an amount such that the weight ratio of binder to agent for exfoliation is comprised from 2:1 to 1:2; preferably from 3:2 to 2:3.

In a preferred embodiment of the second aspect of the invention, the ink composition comprises from 1% to 4% in weight of the agent for exfoliation, whereby the percentages in weight are expressed in relation to the sum of the weights of the carbonaceous material, the agent for exfoliation and the binder.

In a preferred embodiment of the second aspect of the invention, the ink composition comprises from 1% to 6% in weight of the binder, whereby the percentages in weight are expressed in relation to the sum of the weights of the carbonaceous material, the agent for exfoliation and the binder.

In a preferred embodiment of the second aspect of the invention, the ink composition is one wherein the concentration of graphite is between 40 and 1000 g per liter of solvent; preferably of 60 or 600 g per liter of solvent. In more preferred embodiments, it is of 600 g per liter of solvent.

Thus, in preferred embodiments of the second aspect of the invention, the ink composition is one having a kinematic viscosity of between 300 and 3000 Pa·s; preferably of between 1000 and 1500 Pa s. It is advantageous as it allows using the ink composition in advanced manufacturing techniques, such as screen printing, syringe-extrusion and 3D printing.

In a more preferred embodiment of the second aspect of the invention, the ink composition comprises, and preferably consists of, 1,2-propanodiol as a solvent and 93% by weight of graphite, 1.7% by weight of cellulose nanocrystal, 1.6% by weight of polyaniline, 3.7% by weight of carboxymethylcellulose, wherein the concentration of graphite is of 600 g per liter of solvent. The ink is further referred to herein as ink A.

In a more preferred embodiment of the second aspect of the invention, the ink composition comprises, and preferably consists of, 1,2-propanodiol as a solvent and 94% by weight of graphite, 3% by weight of cellulose nanocrystal obtainable by acidic treatment of filter paper, 3% by weight of carboxymethylcellulose, wherein the concentration of graphite is of 600 g per liter of solvent. This ink is further referred to herein as ink C.

In a more preferred embodiment of the second aspect of the invention, the ink composition comprises, and preferably consists of, 1,2-propanodiol or water as a solvent and 94% by weight of graphite, 3% by weight of cellulose nanocrystal or nanofiber obtainable by enzymatic hydrolysis of filter paper, 3% by weight of carboxymethylcellulose, wherein the concentration of graphite is of 600 g per liter of solvent. Methods for enzymatic hydrolysis of filter paper are known in the art and as defined above in the first aspect of the invention. This ink is further referred to herein as ink E when the solvent is 1,2-propanodiol. This ink is further referred to herein as ink H when the solvent is water.

In a more preferred embodiment of the second aspect of the invention, the ink composition comprises, and preferably consists of, 1,2-propanodiol as a solvent and 96.3 % by weight of graphite, 1.8% by weight of cellulose nanocrystal or nanofiber obtainable by enzymatic hydrolysis of filter paper, 1.9% by weight of carboxymethylcellulose, wherein the concentration of graphite is of 600 g per liter of solvent. This ink is further referred to herein as ink J.

In a more preferred embodiment of the second aspect of the invention, the ink composition comprises, and preferably consists of, 1,2-propanodiol as a solvent and 97.2% by weight of graphite, 1.2% by weight of cellulose nanocrystal or nanofiber obtainable by enzymatic hydrolysis of filter paper, 1.6% by weight of carboxymethylcellulose, wherein the concentration of graphite is of 600 g per liter of solvent. This ink is further referred to herein as ink K.

As further illustrated in the Examples below, inks A, C, E, H, J and K are particularly useful in the preparation of conductive coating.

As defined above, a third aspect of the invention relates to a composition obtainable by the method of the first aspect of the invention.

A fourth aspect of the invention relates to a method for the preparation of a conductive coated substrate comprising the steps of:

(i) providing a substrate for receiving a conductive ink for coating;
(ii) providing an ink composition as defined in any one of the second or the third aspect of the invention;
(iii) depositing the ink provided in step (ii) on the substrate provided in step (i);
(iv) drying the ink deposited in step (iii) so as to form a film of said dried ink;
(v) reducing the thickness of the film resulting from step (iv) until reaching a film thickness of less than 50% the thickness of the film resulting from step (iv) and, optionally, repeating steps (iii) to (v).

In a preferred embodiment of the fourth aspect of the invention, the substrate is made of cardboard, paper, cellulose acetate or plastic material such as polypropylene, polyvinyl chloride, polyacrylonitrile, polyurethane or polyethylene terephthalate.

In a preferred embodiment of the fourth aspect of the invention, the thickness of the film produced in step (v) is of at least 5 μm; preferably of between 10 and 80 μm. As further detailed in the Examples below, the thicker the film is, the more conductive the coating is.

In a preferred embodiment of the fourth aspect of the invention, the deposition step (iii) may be carried out by screen-printing, ink extrusion, 3D printing or doctor blade application. More preferably, the deposition step is carried out by screen-printing techniques, such as silk screen printing. As known in the art, different patterns may advantageously be printed using this technique.

In further preferred embodiments of the fourth aspect of the invention, the deposition step (iii) may be carried out by screen-printing using silk fabrics having from 43 to 120 threads per cm.

In a preferred embodiment of the fourth aspect of the invention, the drying step (iv) is carried out by heating, preferably at a temperature above the boiling point of the solvent of the ink provided in step (i). Thus, when the solvent is 1,2-proponadiol, the drying step (iv) may be carried out at a temperature of 150 °C.

In a preferred embodiment of the fourth aspect of the invention, the film produced by the drying step (iv) has a thickness higher than 40 μm.

In a preferred embodiment of the fourth aspect of the invention, in step (v), the thickness of the film resulting from step (iv) is reduced until reaching a film thickness of less than 40% the thickness of the film resulting from step (iv); preferably, the thickness of the film resulting from step (iv) is reduced until reaching a film thickness of less than 30% the thickness of the film resulting from step (iv). As mentioned above, it is believed that this step promotes a shear between the platelets of exfoliated graphite comprised in the ink, thereby inducing a second exfoliation of the graphite within the deposited coating, which leads to an increase of the conductivity of said coating.

In a preferred embodiment of the fourth aspect of the invention, the thickness of the film produced in step (v) is of at least 5 μm; preferably of between 10 and 80 μm.

In a preferred embodiment of the fourth aspect of the invention, step (v) is carried out by submitting the film of step (iv) to compression rolling. Said compression rolling is preferably carried out at a rate of between 1 to 5 cm per second.

In a preferred embodiment of the fourth aspect of the invention, the method comprises the further step (vi) of heating the coated substrate resulting from step (v); preferably at a temperature comprised of from 200 °C to 300 °C. Said heating step is preferably carried out for a period of from 5 to 10 minutes.

A fifth aspect of the invention relates to a coated substrate obtainable by the method of the fourth aspect of the invention as defined above in any of the preferred embodiments of the fourth aspect.

In a preferred embodiment of the fifth aspect of the invention, the coating has a surface resistivity lower than 40 ohm per square; preferably lower than 10 ohm per square; more preferably lower than 5 ohm per square.

In a preferred embodiment of the fifth aspect of the invention, the coating has a conductivity of at least 8000 S per meter, preferably of at least 15000 S per meter.

In a sixth aspect, the invention relates to a coated substrate wherein the coating comprises a carbonaceous material consisting of one or more of graphene, exfoliated graphite and a mixture thereof with graphite; an agent for exfoliation selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof; and a binder selected from the group consisting of polyaniline, polyaniline and a water soluble polysaccharide having a degree of polymerization higher than 5 and optionally substituted at any available position with one or more radicals independently selected from the group consisting of $(C_1-C_6)$alkyl, $(C_1-C_6)$alkylcarbonyl and $(C_1-C_6)$alkyl-$CO_2H$, wherein the binder and the agent for exfoliation are different and wherein the agent for exfoliation is in an amount such that the weight ratio of agent for exfoliation to the carbonaceous material is comprised from 1:100 to 1:20 and wherein the binder is in an amount such that the weight ratio of binder to agent for exfoliation is comprised from 4:1 to 1:2.

In a preferred embodiment of the sixth aspect, the invention relates to a coated substrate wherein the substrate is made of paper or of a plastic material. In certain embodiments, the plastic material is polyethylene terephthalate. The substrate is preferably a sheet.

In a preferred embodiment of the sixth aspect of the invention, the coated substrate is one wherein the carbonaceous material is as defined in any of the embodiments of the second aspect of the invention and/or is present in an amount as defined in any of the embodiments of the second aspect of the invention.

In a preferred embodiment of the sixth aspect of the invention, the coated substrate is one wherein the agent for exfoliation is as defined in any of the embodiments of the second aspect of the invention and/or is present in an amount as defined in any of the embodiments of the second aspect of the invention.

In a preferred embodiment of the sixth aspect of the invention, the coated substrate is one wherein the binder is as defined in any of the embodiments of the second aspect of the invention and/or is present in an amount as defined in any of the embodiments of the second aspect of the invention.

In a preferred embodiment of the sixth aspect of the invention, the coated substrate is one wherein the coating has a thickness of at least 5 $\mu$m; preferably of between 10 and 80 $\mu$m.

In a preferred embodiment of the sixth aspect of the invention, the coated substrate has a surface resistivity lower than 40 ohm per square; preferably lower than 10 ohm per square; more preferably lower than 5 ohm per square.

In another preferred embodiment of the sixth aspect of the invention, the coating has a conductivity of at least 8000 S per meter, preferably of at least 15000 S per meter.

Throughout the description and claims the word "comprises" and variations of the word, are not intended to exclude other technical features, additives, components or steps. Furthermore, the word "comprise" encompasses the cases of "consist of" and "consists essentially of". Additional objects, advantages and features of the invention will become apparent to those skilled in the art upon examination of the description or may be learned by practice of the invention. The following examples are provided by way of illustration, and they are not intended to be limiting of the present invention.

## EXAMPLES

*General considerations*

UV-Vis spectroscopic measurements were performed on a NanoDrop device (Thermo Scientific) in spectrophotometer mode, analysing in the rage of 700 to 200 nm and measuring the absorbance at 660 nm.

Cellulose nanocrystals or nanofibers obtained by enzymatic hydrolysis were prepared by hydrolysis of filter paper using an ancestral endoglucanase enzyme using the process disclosed in Barruetabeña et al. Comm. Chem. 2:76, 2019 (p. 10-11) and Alonso-Lerma et al. Commun. Mater. 1:57, 2020,

Cellulose nanocrystals or nanofibers obtained by acidic hydrolysis were prepared by hydrolysis of filter paper using sulfuric acid as disclosed in Composites Science and Technology 92 (2014) 27-33, section 2.2 of page 28,.

The graphite, consisted on synthetic graphite powder (CAS: 7782-42-5, grain size < 30 microns) with main diffraction peak at 26.6 ° (at 2$\theta$) and specific density of 2.2 g/$cm^3$.

Silk screen printing device and meshes (Brildor, #43to #120).The meshes were coated with azo-sesitized emulsion inks, left to dry for about 30 min and then irradiated with the desired patterned photolite on it. After irradiation for 15 min under (about 1 m below) a UV-lamp the meshes were severely rinsed with water so that the no cured ink was removed leaving the desired pattern uncovered. The different graphenic inks were applied ans spread using a rubber squeege (75 shore) and as the reology of the present inks is optimal, the patterns were retain after application.

A commercial semiconductor characterization equipment (Jandel, Model RM3-AR) was used in the four probe mode either in contact or indenting into the sample bulkiness. The surface resistivity values (in Ω/□) were gathered by applying different current intensities, ranging between 10 nA to 50 mA. Measurements were taken for samples with different inks, different printing passes, different post treatment conditions (temperature and rolling) as described herein.

The viscosity was measured kinematically, by measuring the time needed for a representative ink (Ink E) to flow through a plastic 10 mL vial with a hole at its botom, and provided with mL scales. These allowed to compute the flowing speed.This time was compared with the time needed by glycerol to flow trough the same vial and the viscosity was estimated by:

$$\eta^{Ink} \simeq \eta^{Glycerol} \left( \frac{V_{Glycerol}}{V_{Ink}} \right)$$

Compression rolling was carried out using a 130 mm long double stain-less steel rolling machine, having a diameter of rolls of 65 mm, mirror tablets, maximum opening: 0-5 mm, flat area (+ /- 0.01 mm): 130 mm.

*Method for the evaluation of agents for exfoliation by sedimentation*

The efficiency of graphite exfoliation triggered by agents for exfoliation, such as lignosulfonates and cellulose nanocrystals, was determined quantitatively in sedimentation experiments. In a first step, a suspension of natural graphite flakes having an average width of 500 μm and a concentration of 100 mg per mL of water was prepared. Different amounts of agent for exfoliation were added in divided samples of the aforementioned suspension in order to prepare several suspensions of graphite having different concentrations of agent for exfoliation, in the range 0.1-10 mg/mL. The resulting mixtures were sonicated in a water bath for two hours and then centrifugated at 100 rcf for 5 minutes. Supernatant liquid was collected and its light absorbance at 660 nm was measured. Concentration of exfoliated graphite or graphene in the supernatant liquid was calculated from Beer-Lambert law on the basis that graphene has a molar extinction coefficient ε, of 680 $mL \cdot g^{-1} \cdot m^{-1}$, said value being obtained by gravimetric calibration.

Figure 2 shows the results of said measurements using as exfoliating agent lignosulfonates (top), cellulose nanocrystal (bottom, square) or carboxymethylcellulose (bottom, circle - comparative example). The results of Figure 2 show that both lignosulfonate and cellulose nanocrystals are suitable agents for exfoliation, as they both allow achieving concentrations of exfoliated graphite and/or graphene in a range of between 0.4 and 0.5 gram per liter. Carboxymethyl cellulose, in turn, is not a suitable agent for exfoliation because the amount of exfoliated graphite and/or graphene in the supernatant decreases drastically with an increasing amount of exfoliating agent, especially in the range 5 to 10 mg per mL.

*General Method for the preparation of an ink*

*Method A:* One method according to the first aspect of the invention consists of the following steps:

(i) A mixture of the agent for exfoliation (cellulose nanocrystal CNC or enzymatic nanocellulose ENC) as indicated in Table 1 and synthetic graphite in a 1/1 (v/v) mixture of water and isopropanol is prepared such that the concentration of graphite is 75 g per liter of the mixture and such that the weight ratio of agent for exfoliation to graphite is as indicated in Table 1;

(ii) The mixture provided in step (i) is homogenised by sonication in a water bath for one hour;

(iii) A binder, that is carboxymethyl cellulose (CMC) or a mixture thereof with polyaniline, as indicated in Table 1, is added to the mixture resulting from step (ii), in an amount such that the weight ratio of binder to graphite is as indicated in Table 1;

(iv) 1,2-propanodiol is added to the mixture resulting from step (iii) in an amount such that the volume ratio of 1,2-propanodiol to the mixture of water and isopropanol is 1:8; and

(v) In the mixture resulting from step (iv), water and isopropanol are evaporated at around 100 °C and using mild magnetic agitation, thereby producing a viscous grey fluid that is an ink according to the invention.

*General Method for the preparation of a coated substrate*

*Method B*: One method according to the fourth aspect of the invention consists of the following steps:

(i) providing a substrate for receiving a conductive ink for coating that is a sheet of paper or a sheet of polyethylene terephthalate (PET);
(ii) providing an ink composition as prepared following method A;
(iii) depositing the ink provided in step (ii) on the substrate provided in step (i) by silk screen-printing using a #43 mesh; the mesh having previously been submitted to a treatment with a photosensitive ink (Zoicocoat WR, KOPIMASK) and irradiated with photoliths with different printing patterns;
(iv) drying the ink deposited in step (iii) so as to form a film of said dried ink by heating at 150 °C;
(v) reducing the thickness of the film resulting from step (iv) by compression rolling using a stainless steel flat roll mill;
(vi) optionally, repeating steps (iii) to (v) - the sequence of steps (iii) to (v) is also referred to herein as a "printing pass"; the number of printing passes for each prepared coated substrate is as shown in Table 1;
(vii) heating the coated substrate obtained in step (vi) at a temperature of 220 - 250 °C for 10 -15 minutes.

*Method for the measurement of the thickness of a coating*

The thickness of the prepared coatings was measured using a micrometer Mitutoyo® (HDP356) by substracting the thickness of the substrate as measured prior to coating to the measured thickness of the coated substrate.

*Method for the measurement of resistivity of the coated substrate*

For surface resistivity (and conductivity) measurements, the well-established four point method was used on substrates coated with circular patterns of 30 mm in diameter (chosen in the printing step of method B) as shown in Figure 3 (right). Surface resistivity measurements have been taken in regions near the center of these circles in order to minimize the edge effects or distortions when measuring.

Surface resistivity was measured using a commercial semiconductor characterization equipment, with a four-point terminal, specific for the measurement of surface resistivities. Measurements have been made using a wide range of currents, from 1 nA to 70 mA. The value of 10 mA has been chosen as the normative value for the comparison of resistivities between different materials. Thus, all the values in Table 1 are given for current values of 10 mA. Surface resistivity values have been measured by indenting the tips (the results of which closely correspond to the mass conductivity value of the material) and by subtle contact of the tips with the surface of the coating. The surface resistivity values obtained by surface contact measurement ($R_{s,c}$) are substantially lower than the values obtained by indentation ($R_{s,i}$), as can be seen from the values reported in Table 1.

With the values of surface resistivity, $R_s$, and thickness, t, the conductivity value of the coating has been estimated using the relationship: $\sigma$ (S/m) = $1/(R_s \cdot t)$.

Table 1 below summarizes different ink compositions prepared according to method A having a graphite concentration of 600 g per liter of solvent and different paper substrates coated with said inks according to method B, together with their physical properties.

Table 1

| Ink | Solvent | Weight % of components | | | | | Printing Passes | Physical properties of coated substrate | | | |
|---|---|---|---|---|---|---|---|---|---|---|---|
| | | G | CNC | ENC | CMC | PANI | | Thickness (μm) | $R_s$,i (Ω/□) | σ (S/m) | $R_s$,c (mΩ/□) |
| A | 1,2PD | 93.0 | 1.6 | 0 | 3.8 | 1.6 | 1 | 6 ± 3 | 147 ± 16 | 1470 | - |
| A | 1,2PD | 93.0 | 1.6 | 0 | 3.8 | 1.6 | 4 | 12 ± 6 | 10 ± 2 | 8900 | - |
| C | 1,2PD | 94.0 | 3 | 0 | 3 | 0 | 2 | 16 ± 5 | 32 ± 3 | 1953 | - |
| C | 1,2PD | 94.0 | 3 | 0 | 3 | 0 | 4 | 26 ± 5 | 8 ± 2 | 4800 | - |
| E | 1,2PD | 94.0 | 0 | 3 | 3 | 0 | 2 | 15 ± 5 | 7 ± 1 | 9524 | ~7 |
| E | 1,2PD | 94.0 | 0 | 3 | 3 | 0 | 4 | 22 ± 7 | 3 ± 1 | 15151 | ~7 |
| E | 1,2PD | 94.0 | 0 | 3 | 3 | 0 | 5 | 27± 7 | 1.9 ± 0.2 | 19500 | ~5 |
| H | $H_2O$ | 94.0 | 0 | 3 | 3 | 0 | 4 | 38 ± 5 | 5 ± 2 | 5300 | ~5 |
| I | 1,2PD | 97.0 | 0 | 0 | 3 | 0 | 4 | 10 ± 5 | 13.8 ± 2.9 | 7246 | ~7 |
| J | 1,2PD | 96.3 | 0 | 1.8 | 1.9 | 0 | 4 | 16 ± 3 | 2.4 ± 0.4 | 26042 | ~7 |
| K | 1,2PD | 97.2 | 0 | 1.2 | 1.6 | 0 | 8 | 40 ± 7 | 0.6 ± 0.2 | 41670 | ~7 |
| Blank* | 1,2PD | 100 | 0 | 0 | 0 | 0 | 4 | 33 ± 5 | 0.007 ± 0.0003 | $4.329E^6$ | ~9 |
| Aluminium | 0 | 0 | 0 | 0 | 0 | 0 | - | 9 ± 1 | 0.009 ± 0.002 | $1.2E^7$ | ~9 |
| 1,2 PD = 1,2-propanodiol; * blank is performed with an ink prepared with graphite only | | | | | | | | | | | |

As will be obvious to the skilled person, ink I does not contain any agent for exfoliation and is provided as a comparative example. Data related to blank and aluminium coating are also provided as reference examples.

*Discussion of the results*

The results of Table 1 above show that, when comparing the results of ink I (comparative example with no agent for exfoliation) with ink H or ink J, the combination of an agent for exfoliation such as ENC and a binder such as CMC surprisingly allows forming conductive coatings with lower resistivity than a conductive coating prepared following method B from an ink comprising only the binder as CMC. The coating resulting from ink I is slightly conductive as a result of graphite exfoliation triggered by CMC alone (as shown in Figure 2, CMC may act as exfoliation agent). Also, the results of Figure 8 shows that comparative ink formulations comprising graphite and cellulose nanocrystal and/or nanofiber as exfoliating agent and deprived of a binder are not suitable for forming conductive coatings because the formed deposited film does not adhere to the substrate of the surface. These data show that the combination of the agent for exfoliation and the binder is essential in the ink formula in order to form a conductive coating according to the method of the invention.

The results of Figure 5 show that the step of reducing the thickness of the conductive coating in the method of the invention (e.g. by compression) allows producing a coating with reduced resistivity. This is an evidence that this step triggers a second exfoliation process of the ink once deposited on the substrate.

The results of Table 1 also show that the number of printing passes employed in the method of preparation of the conductive coating allows for producing films with increased thickness. The data of Table 1 and Figure 7 show that the resistivity of the conductive coating decreases with an increasing film thickness. This effect can also be derived from Figure 7.

By comparison of ink E with ink H, it can be derived that 1,2-propanodiol is preferred over water as a solvent because it allows forming conductive coatings with similar resistivity but using a minor number of printing passes, and thus by advantageously using a minor amount of ink material.

The results of Figure 6 show that, by comparing the resistivities of conductive coatings of different thicknesses prepared from ink C or ink E, when using cellulose nanofiber or cellulose nanocrystal obtained by enzymatic digestion of filter paper as agent for exfoliation, in particular when using cellulose nanofiber or cellulose nanocrystal obtained by digestion of filter paper mediated by endoglucanase associated to the last firmicute common ancestor optionally linked to a carbohydrate binding module, the resistivity of the resulting conductive coating is lower than when cellulose nanofiber and/or nanocrystal prepared by acidic treatment of filter paper is used as agent for exfoliation. Without being bound to theory, it is believed that this is due to the fact that cellulose nanocrystals and/or nanofibers prepared by enzymatic digestion are more hydrophobic than cellulose nanocrystals and/or nanofibers prepared by acidic treatment of filter paper because they bear a reduced number of charged groups, such as sulfate groups.

## Claims

**1.** Method for the production of an ink for forming a conductive coating comprising the steps of:

(i) providing a mixture comprising graphite, an agent for exfoliation and a first polar solvent, wherein:

- the agent for exfoliation is selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof; and
- the weight ratio of agent for exfoliation to graphite is comprised from 1:100 to 1:20;

(ii) homogenising the mixture provided in step (i);
(iii) adding to the mixture resulting from step (ii) a binder that is different from the agent for exfoliation, wherein said binder is selected from the group consisting of polyaniline and a water soluble polysaccharide having a degree of polymerization higher than 5 and optionally substituted at any available position with one or more radicals independently selected from the group consisting of $(C_1\text{-}C_6)$alkyl, $(C_1\text{-}C_6)$alkylcarbonyl and $(C_1\text{-}C_6)$alkyl-$CO_2H$; and wherein the binder is in an amount such that the weight ratio of binder to agent for exfoliation is comprised from 4:1 to 1:2;
(iv) adding to the mixture resulting from step (iii) a second polar protic solvent having a boiling point equal to or higher than the first polar solvent provided in step (i); and
(v) removing substantially all the first polar solvent provided in step (i) while leaving substantially all the second polar protic solvent added in step (iv).

**2.** Method according to claim 1 wherein the first polar solvent of the mixture of step (i) is is a mixture of water and isopropanol in a 1:1 volume ratio.

**3.** Method according to any one of claims 1 or 2 wherein the agent for exfoliation is selected from the group consisting of lignosulfonate, cellulose nanocrystals and cellulose nanofibers, whereby said cellulose nanofibers or cellulose nanocrystals are obtained by enzymatic digestion of filter paper mediated by endoglucanase.

**4.** Method according to any one of claims 1 to 3 wherein the weight ratio of agent for exfoliation to graphite is comprised from 1:90 to 1:30.

**5.** Method according to any one of claims 1 to 4 wherein step (ii) is carried out by sonicating with a mild bath or a tip or by shear mixing the mixture of step (i).

**6.** Method according to any one of claims 1 to 5 wherein the binder of step (iii) is selected from the group consisting of carboxymethylcellulose, polyaniline and mixtures thereof.

**7.** Method according to any one of claims 1 to 6 wherein the second solvent of step (iv) is 1,2-propanodiol.

**8.** Ink composition for forming a conductive coating comprising:

- a solvent,
- a carbonaceous material consisting of one or more of graphene, exfoliated graphite and a mixture thereof with graphite;
- an agent for exfoliation selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, optionally sulfonated tannins and mixtures thereof; and
- a binder selected from the group consisting of polyaniline and a water soluble polysaccharide having a degree of polymerization higher than 5 and optionally substituted at any available position with one or more radicals independently selected from the group consisting of $(C_1\text{-}C_6)$alkyl, $(C_1\text{-}C_6)$alkylcarbonyl and $(C_1\text{-}C_6)$alkyl-$CO_2H$, wherein the binder and the agent for exfoliation are different and wherein the agent for exfoliation is in an amount such that the weight ratio of agent for exfoliation to the carbonaceous material is comprised from 1:100 to 1:20 and wherein the binder is in an amount such that the weight ratio of binder to agent for exfoliation is comprised from 4:1 to 1:2.

**9.** Composition according to claim 8 comprising from 85% to 98% in weight of the carbonaceous material, whereby the percentages in weight are expressed in relation to the sum of the weights of the carbonaceous material, the agent for exfoliation and the binder.

**10.** Composition according to any one of claims 8 to 9 wherein the solvent is 1,2 propanodiol or an azeotropic mixture thereof with water and/or isopropanol.

**11.** Composition according to any one of claims 8 to 10 having a kinematic viscosity of between 1000 and 1500 Pa s.

**12.** Composition according to any one of claims 8 to 11 comprising from 90% to 98% in weight of the carbonaceous material and from 1% to 4% in weight of the agent for exfoliation and from 1% to 6% in weight of the binder, whereby the percentages in weight are expressed in relation to the sum of the weights of the carbonaceous material, the agent for exfoliation and the binder.

**13.** Composition obtainable by the method of any one of claims 1 to 7.

**14.** Method for the preparation of a conductive coated substrate comprising the steps of:

(i) providing a substrate for receiving a conductive ink for coating;
(ii) providing an ink composition as defined in any one of claims 8 to 12 or 13;
(iii) depositing the ink provided in step (ii) on the substrate provided in step (i);
(iv) drying the ink deposited in step (iii) so as to form a film of said dried ink;
(v) reducing the thickness of the film resulting from step (iv) until reaching a film thickness of less than 50% the thickness of the film resulting from step (iv) and, optionally, repeating steps (iii) to (v).

15. Coated substrate obtainable by the method of claim 14.

16. Coated substrate wherein the coating comprises a carbonaceous material consisting of one or more of graphene, exfoliated graphite and a mixture thereof with graphite; an agent for exfoliation selected from the group consisting of lignosulfonate, cellulose nanocrystals, cellulose nanofibers, chitin nanocrystals, chitin nanofibers, hemicellulose nanocrystals, hemicellulose nanofibers, starch nanocrystals, starch nanofibers, lignin, tannins and mixtures thereof; and a binder selected from the group consisting of polyaniline and a water soluble polysaccharide having a degree of polymerization higher than 5 and optionally substituted at any available position with one or more radicals independently selected from the group consisting of ($C_1$-$C_6$)alkyl, ($C_1$-$C_6$)alkylcarbonyl and ($C_1$-$C_6$)alkyl-$CO_2H$, wherein the binder and the agent for exfoliation are different and wherein the agent for exfoliation is in an amount such that the weight ratio of agent for exfoliation to the carbonaceous material is comprised from 1:100 to 1:20 and wherein the binder is in an amount such that the weight ratio of binder to agent for exfoliation is comprised from 4:1 to 1:2.

## Patentansprüche

1. Verfahren zur Herstellung einer Tinte zur Bildung einer leitfähigen Beschichtung, umfassend die Schritte:

   (i) Bereitstellen eines Gemisches, das Graphit, ein Mittel zur Exfoliation und ein erstes polares Lösungsmittel umfasst, wobei:

   - das Mittel zur Exfoliation aus der Gruppe, bestehend aus Lignosulfonat, Cellulose-Nanokristallen, Cellulose-Nanofasern, Chitin-Nanokristallen, Chitin-Nanofasern, Hemicellulose-Nanokristallen, Hemicellulose-Nanofasern, Stärke-Nanokristallen, Stärke-Nanofasern, Lignin, Tanninen und Gemischen davon, ausgewählt ist; und
   - das Gewichtsverhältnis von Mittel zur Exfoliation zu Graphit 1:100 bis 1:20 beträgt;

   (ii) Homogenisieren des in Schritt (i) bereitgestellten Gemisches;
   (iii) Zugeben eines Bindemittels, das sich von dem Mittel zur Exfoliation unterscheidet, zu dem aus Schritt (ii) resultierenden Gemisch, wobei das Bindemittel aus der Gruppe ausgewählt ist, bestehend aus Polyanilin und einem wasserlöslichen Polysaccharid mit einem Polymerisationsgrad von höher als 5 und gegebenenfalls an einer verfügbaren Position substituiert mit einem oder mehreren Radikalen, unabhängig ausgewählt aus der Gruppe, bestehend aus ($C_1$-$C_6$-)Alkyl, ($C_1$-$C_6$-)Alkylcarbonyl und ($C_1$-$C_6$-)Alkyl-$CO_2H$; und wobei das Bindemittel in einer solchen Menge vorhanden ist, dass das Gewichtsverhältnis von Bindemittel zu Mittel zur Exfoliation 4:1 bis 1:2 beträgt;
   (iv) Zugeben eines zweiten polaren protischen Lösungsmittels mit einem Siedepunkt, der gleich oder höher als derjenige des in Schritt (i) bereitgestellten ersten polaren Lösungsmittels ist, zu dem aus Schritt (iii) resultierenden Gemisch; und
   (v) Entfernen im Wesentlichen des gesamten in Schritt (i) bereitgestellten ersten polaren Lösungsmittels, während im Wesentlichen das gesamte in Schritt (iv) zugegebene zweite polare protische Lösungsmittel zurückbleibt.

2. Verfahren gemäß Anspruch 1, wobei das erste polare Lösungsmittel des Gemisches aus Schritt (i) ein Gemisch aus Wasser und Isopropanol im Volumenverhältnis 1:1 ist.

3. Verfahren gemäß einem der Ansprüche 1 oder 2, wobei das Mittel zur Exfoliation aus der Gruppe, bestehend aus Lignosulfonat, Cellulose-Nanokristallen und Cellulose-Nanofasern, ausgewählt ist, wobei die Cellulose-Nanofasern oder Cellulose-Nanokristalle durch enzymatischen Aufschluss von Filterpapier mittels Endoglucanase erhalten werden.

4. Verfahren gemäß einem der Ansprüche 1 bis 3, wobei das Gewichtsverhältnis von Mittel zur Exfoliation zu Graphit 1:90 bis 1:30 beträgt.

5. Verfahren gemäß einem der Ansprüche 1 bis 4, wobei Schritt (ii) durch Beschallen mit einem milden Bad oder einer Spitze oder durch Schermischen des Gemisches aus Schritt (i) durchgeführt wird.

6. Verfahren gemäß einem der Ansprüche 1 bis 5, wobei das Bindemittel aus Schritt (iii) aus der Gruppe, bestehend aus Carboxymethylcellulose, Polyanilin und Gemischen davon, ausgewählt ist.

**7.** Verfahren gemäß einem der Ansprüche 1 bis 6, wobei das zweite Lösungsmittel aus Schritt (iv) 1,2-Propandiol ist.

**8.** Tintenzusammensetzung zur Bildung einer leitfähigen Beschichtung, umfassend:

- ein Lösungsmittel,
- ein kohlenstoffhaltiges Material, das aus einem oder mehreren von Graphen, exfoliertem Graphit und einem Gemisch davon mit Graphit besteht;
- ein Mittel zur Exfoliation, ausgewählt aus der Gruppe, bestehend aus Lignosulfonat, Cellulose-Nanokristallen, Cellulose-Nanofasern, Chitin-Nanokristallen, Chitin-Nanofasern, Hemicellulose-Nanokristallen, Hemicellulose-Nanofasern, Stärke-Nanokristallen, Stärke-Nanofasern, Lignin, gegebenenfalls sulfonierten Tanninen und Gemischen davon; und
- ein Bindemittel, ausgewählt aus der Gruppe, bestehend aus Polyanilin und einem wasserlöslichen Polysaccharid mit einem Polymerisationsgrad von höher als 5 und gegebenenfalls an einer verfügbaren Position substituiert mit einem oder mehreren Radikalen, unabhängig ausgewählt aus der Gruppe, bestehend aus ($C_1$-$C_6$-)Alkyl, ($C_1$-$C_6$-)Alkylcarbonyl und ($C_1$-$C_6$-) Alkyl-$CO_2H$, wobei das Bindemittel und das Mittel zur Exfoliation unterschiedlich sind und wobei das Mittel zur Exfoliation in einer solchen Menge vorhanden ist, dass das Gewichtsverhältnis von Mittel zur Exfoliation zu kohlenstoffhaltigem Material 1:100 bis 1:20 beträgt und wobei das Bindemittel in einer solchen Menge vorhanden ist, dass das Gewichtsverhältnis von Bindemittel zu Mittel zur Exfoliation 4:1 bis 1:2 beträgt.

**9.** Zusammensetzung gemäß Anspruch 8, umfassend 85 bis 98 Gewichtsprozent des kohlenstoffhaltigen Materials, wobei sich die Gewichtsprozentsätze auf die Summe der Gewichte des kohlenstoffhaltigen Materials, des Mittels zur Exfoliation und des Bindemittels beziehen.

**10.** Zusammensetzung gemäß einem der Ansprüche 8 bis 9, wobei das Lösungsmittel 1,2-Propandiol oder ein azeotropes Gemisch davon mit Wasser und/oder Isopropanol ist.

**11.** Zusammensetzung gemäß einem der Ansprüche 8 bis 10 mit einer kinematischen Viskosität zwischen 1000 und 1500 Pa·s.

**12.** Zusammensetzung gemäß einem der Ansprüche 8 bis 11, umfassend 90 bis 98 Gewichtsprozent des kohlenstoffhaltigen Materials und 1 bis 4 Gewichtsprozent des Mittels zur Exfoliation und 1 bis 6 Gewichtsprozent des Bindemittels, wobei sich die Gewichtsprozentsätze auf die Summe der Gewichte des kohlenstoffhaltigen Materials, des Mittels zur Exfoliation und des Bindemittels beziehen.

**13.** Zusammensetzung, erhältlich durch das Verfahren gemäß einem der Ansprüche 1 bis 7.

**14.** Verfahren zur Herstellung eines leitfähigen beschichteten Substrats, umfassend die Schritte:

(i) Bereitstellen eines Substrats zur Aufnahme einer leitfähigen Tinte zum Beschichten;
(ii) Bereitstellen einer Tintenzusammensetzung, wie in einem der Ansprüche 8 bis 12 oder 13 definiert;
(iii) Auftragen der in Schritt (ii) bereitgestellten Tinte auf das in Schritt (i) bereitgestellte Substrat;
(iv) Trocknen der in Schritt (iii) aufgetragenen Tinte, um einen Film aus der getrockneten Tinte zu bilden;
(v) Reduzieren der Dicke des aus Schritt (iv) resultierenden Films, bis eine Filmdicke von weniger als 50 % der Dicke des aus Schritt (iv) resultierenden Films erreicht wird, und gegebenenfalls Wiederholen der Schritte (iii) bis (v).

**15.** Beschichtetes Substrat, erhältlich durch das Verfahren gemäß Anspruch 14.

**16.** Beschichtetes Substrat, wobei die Beschichtung umfasst: ein kohlenstoffhaltiges Material, das aus einem oder mehreren von Graphen, exfoliertem Graphit und einem Gemisch davon mit Graphit besteht; ein Mittel zur Exfoliation, ausgewählt aus der Gruppe, bestehend aus Lignosulfonat, Cellulose-Nanokristallen, Cellulose-Nanofasern, Chitin-Nanokristallen, Chitin-Nanofasern, Hemicellulose-Nanokristallen, Hemicellulose-Nanofasern, Stärke-Nanokristallen, Stärke-Nanofasern, Lignin, Tanninen und Gemischen davon; und ein Bindemittel, ausgewählt aus der Gruppe, bestehend aus Polyanilin und einem wasserlöslichen Polysaccharid mit einem Polymerisationsgrad von höher als 5 und gegebenenfalls an einer verfügbaren Position substituiert mit einem oder mehreren Radikalen, unabhängig ausgewählt aus der Gruppe, bestehend aus ($C_1$-$C_6$-)Alkyl, ($C_1$-$C_6$-)Alkylcarbonyl und ($C_1$-$C_6$-)Alkyl-$CO_2H$, wobei das Bindemittel und das Mittel zur Exfoliation unterschiedlich sind und wobei das Mittel zur Exfoliation in einer

solchen Menge vorhanden ist, dass das Gewichtsverhältnis von Mittel zur Exfoliation zu kohlenstoffhaltigem Material 1:100 bis 1:20 beträgt und wobei das Bindemittel in einer solchen Menge vorhanden ist, dass das Gewichtsverhältnis von Bindemittel zu Mittel zur Exfoliation 4:1 bis 1:2 beträgt.

**Revendications**

**1.** Procédé pour la production d'une encre utile à la formation d'un revêtement conducteur, comportant les étapes consistant à :

(i) fournir un mélange comportant du graphite, un agent d'exfoliation et un premier solvant polaire, dans lequel :

- l'agent d'exfoliation est choisi parmi le groupe constitué de lignosulfonate, de nanocristaux de cellulose, de nanofibres de cellulose, de nanocristaux de chitine, de nanofibres de chitine, de nanocristaux d'hémicellulose, de nanofibres d'hémicellulose, de nanocristaux d'amidon, de nanofibres d'amidon, de lignine, de tanins et de mélanges de ceux-ci, et
- le rapport pondéral de l'agent d'exfoliation sur le graphite est compris entre 1:100 et 1:20,

(ii) homogénéiser le mélange fourni à l'étape (i),
(iii) ajouter au mélange résultant de l'étape (ii) un liant qui est différent de l'agent d'exfoliation, dans lequel ledit liant est choisi parmi le groupe constitué de polyaniline et d'un polysaccharide soluble dans l'eau ayant un degré de polymérisation supérieur à 5 et facultativement substitué dans une position disponible quelconque par un ou plusieurs radicaux choisis indépendamment parmi le groupe constitué d'un alkyle en $C_1$ à $C_6$, d'un alkylcarbonyle en $C_1$ à $C_6$ et d'un alkyle en $C_1$ à $C_6$-$CO_2H$, et dans lequel le liant est présent en une quantité telle que le rapport pondéral du liant sur l'agent d'exfoliation est compris entre 4:1 et 1:2,
(iv) ajouter au mélange résultant de l'étape (iii) un second solvant protique polaire ayant un point d'ébullition égal ou supérieur au premier solvant polaire fourni à l'étape (i), et
(v) retirer pratiquement la totalité du premier solvant polaire fourni à l'étape (i) tout en laissant pratiquement la totalité du second solvant protique polaire ajouté à l'étape (iv).

**2.** Procédé selon la revendication 1, dans lequel le premier solvant polaire du mélange de l'étape (i) est un mélange d'eau et d'isopropanol dans un rapport de volume de 1:1.

**3.** Procédé selon l'une quelconque des revendications 1 ou 2, dans lequel l'agent d'exfoliation est choisi parmi le groupe constitué de lignosulfonate, de nanocristaux de cellulose et de nanofibres de cellulose, en sorte que lesdites nanofibres de cellulose ou lesdits nanocristaux de cellulose sont obtenus par digestion enzymatique de papier filtre médiée par une endoglucanase.

**4.** Procédé selon l'une quelconque des revendications 1 à 3, dans lequel le rapport pondéral de l'agent d'exfoliation sur le graphite est compris entre 1:90 et 1:30.

**5.** Procédé selon l'une quelconque des revendications 1 à 4, dans lequel l'étape (ii) est mise en oeuvre par sonication avec un bain doux ou une pointe ou par mélange sous cisaillement du mélange de l'étape (i).

**6.** Procédé selon l'une quelconque des revendications 1 à 5, dans lequel le liant de l'étape (iii) est choisi parmi le groupe constitué de carboxyméthylcellulose, de polyaniline et de mélanges de celles-ci.

**7.** Procédé selon l'une quelconque des revendications 1 à 6, dans lequel le second solvant de l'étape (iv) est du 1,2-propanodiol.

**8.** Composition d'encre utile à la formation d'un revêtement conducteur, comportant :

- un solvant,
- une matière carbonée constituée d'un ou plusieurs éléments parmi du graphène, du graphite exfolié et un mélange de ceux-ci avec du graphite,
- un agent d'exfoliation choisi parmi le groupe constitué de lignosulfonate, de nanocristaux de cellulose, de nanofibres de cellulose, de nanocristaux de chitine, de nanofibres de chitine, de nanocristaux d'hémicellulose, de nanofibres d'hémicellulose, de nanocristaux d'amidon, de nanofibres d'amidon, de lignine, de tanins facultativement sulfonés et de mélanges de ceux-ci, et
- un liant choisi parmi le groupe constitué de polyaniline et d'un polysaccharide soluble dans l'eau ayant un degré de polymérisation supérieur à 5 et facultativement substitué dans une position disponible quelconque par un ou plusieurs radicaux choisis indépendamment parmi le groupe constitué d'un alkyle en $C_1$ à $C_6$, d'un alkylcarbonyle en $C_1$ à $C_6$ et d'un alkyle en $C_1$ à $C_6$-$CO_2H$, dans lequel le liant et l'agent d'exfoliation sont différents et dans lequel l'agent d'exfoliation est présent en une quantité telle que le rapport pondéral de l'agent d'exfoliation sur la matière carbonée est compris entre 1:100 et 1:20 et dans lequel le liant est présent en une quantité telle que le rapport pondéral du liant sur l'agent d'exfoliation est compris entre 4:1 et 1:2.

**9.** Composition selon la revendication 8, comportant de 85 % à 98 % en poids de la matière carbonée, dans laquelle les pourcentages en poids sont exprimés par rapport à la somme des poids de la matière carbonée, de l'agent d'exfoliation et du liant.

**10.** Composition selon l'une quelconque des revendications 8 à 9, dans laquelle le solvant est le 1,2-propanodiol ou un mélange azéotrope de celui-ci avec de l'eau et/ou de l'isopropanol.

**11.** Composition selon l'une quelconque des revendications 8 à 10 ayant une viscosité cinématique comprise entre 1 000 et 1 500 Pa.s.

**12.** Composition selon l'une quelconque des revendications 8 à 11, comportant de 90 % à 98 % en poids de la matière carbonée et de 1 % à 4 % en poids de l'agent d'exfoliation et de 1 % à 6 % en poids du liant, dans laquelle les pourcentages en poids sont exprimés par rapport à la somme des poids de la matière carbonée, de l'agent d'exfoliation et du liant.

**13.** Composition pouvant être obtenue par le procédé de l'une quelconque des revendications 1 à 7.

**14.** Procédé pour la préparation d'un substrat revêtu conducteur, comportant les étapes consistant à :

(i) fournir un substrat destiné à recevoir une encre conductrice en vue d'un revêtement,
(ii) fournir une composition d'encre telle que définie dans l'une quelconque des revendications 8 à 12 ou 13,
(iii) déposer l'encre fournie à l'étape (ii) sur le substrat fourni à l'étape (i),
(iv) sécher l'encre déposée à l'étape (iii) de manière à former un film de ladite encre séchée,
(v) réduire l'épaisseur du film résultant de l'étape (iv) jusqu'à atteindre une épaisseur de film inférieure à 50 % de l'épaisseur du film résultant de l'étape (iv) et, facultativement, répéter les étapes (iii) à (v).

**15.** Substrat revêtu pouvant être obtenu par le procédé de la revendication 14.

**16.** Substrat revêtu dans lequel le revêtement comporte une matière carbonée constituée d'un ou plusieurs éléments parmi du graphène, du graphite exfolié et un mélange de ceux-ci avec du graphite, un agent d'exfoliation choisi parmi le groupe constitué de lignosulfonate, de nanocristaux de cellulose, de nanofibres de cellulose, de nanocristaux de chitine, de nanofibres de chitine, de nanocristaux d'hémicellulose, de nanofibres d'hémicellulose, de nanocristaux d'amidon, de nanofibres d'amidon, de lignine, de tanins et de mélanges de ceux-ci, et un liant choisi parmi le groupe constitué de polyaniline et d'un polysaccharide soluble dans l'eau ayant un degré de polymérisation supérieur à 5 et facultativement substitué dans une position disponible quelconque par un ou plusieurs radicaux choisis indépendamment parmi le groupe constitué d'un alkyle en $C_1$ à $C_6$, d'un alkylcarbonyle en $C_1$ à $C_6$ et d'un alkyle en $C_1$ à $C_6$-$CO_2H$, dans lequel le liant et l'agent d'exfoliation sont différents et dans lequel l'agent d'exfoliation est présent en une quantité telle que le rapport pondéral de l'agent d'exfoliation sur la matière carbonée est compris entre 1:100 et 1:20 et dans lequel le liant est présent en une quantité telle que le rapport pondéral du liant sur l'agent d'exfoliation est compris entre 4:1 et 1:2.

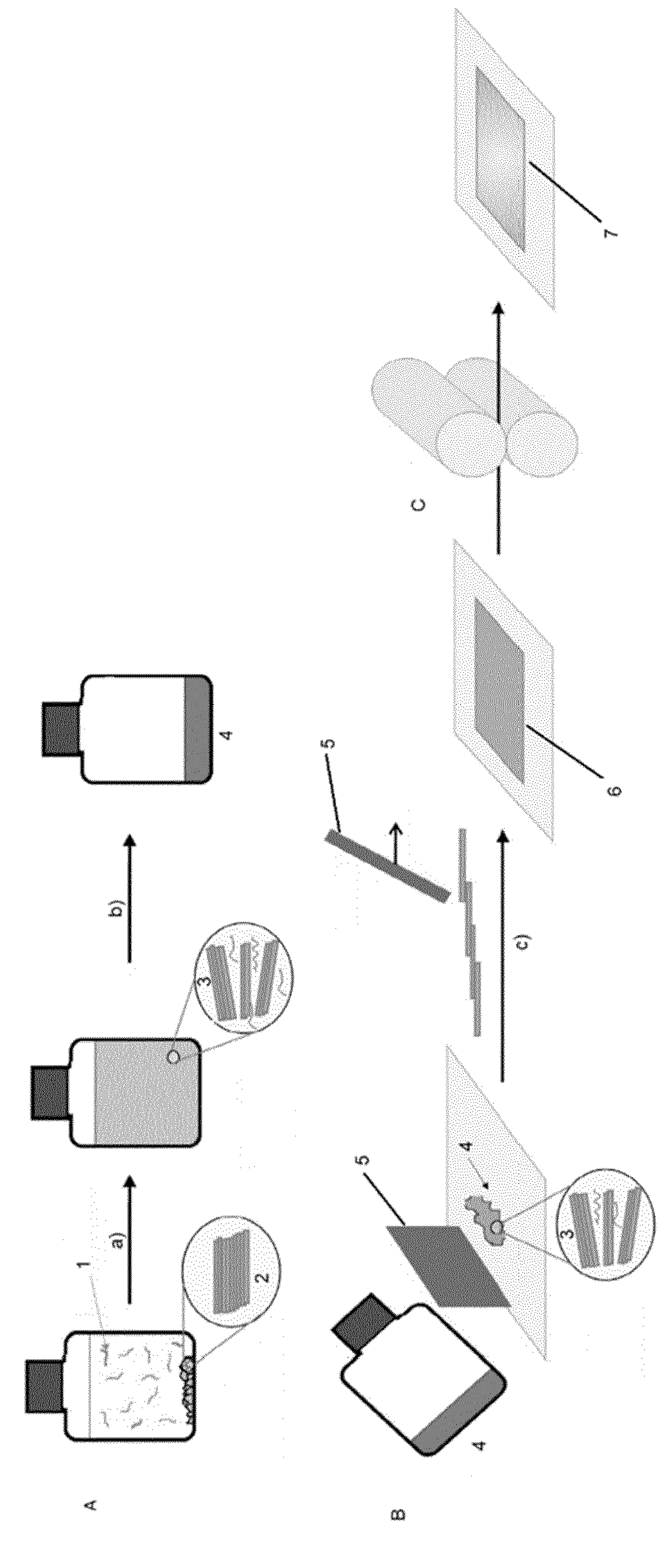


FIG. 1

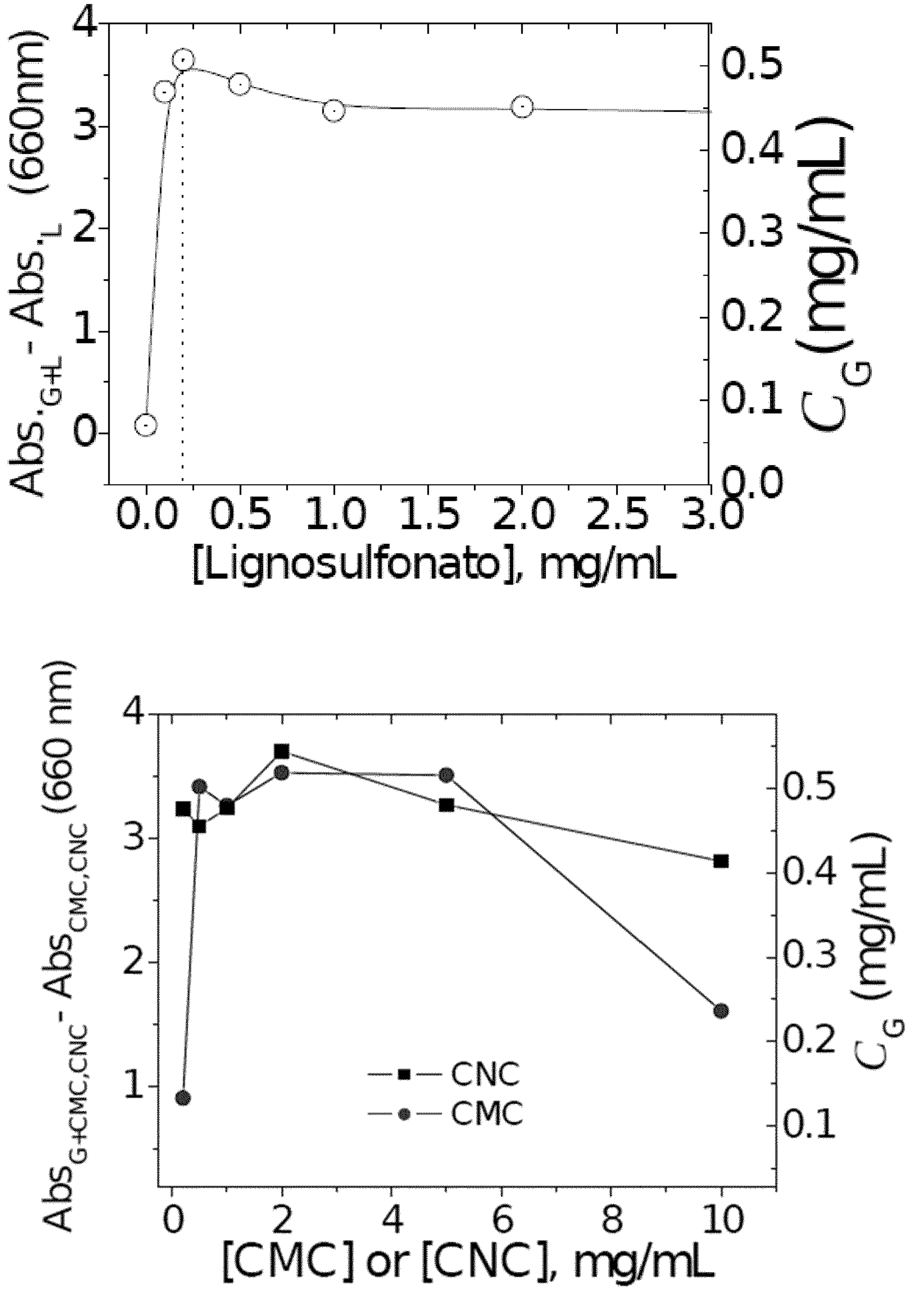
4
3
2
1
0
0.5
0.4
0.3
0.2
0.1
0.0
0.0 0.5 1.0 1.5 2.0 2.5 3.0
[Lignosulfonato], mg/mL
Abs.G+L - Abs.L (660nm)
CG (mg/mL)
4
3
2
1
0.5
0.4
0.3
0.2
0.1
0 2 4 6 8 10
[CMC] or [CNC], mg/mL
AbsG+CMC,CNC - AbsCMC,CNC (660 nm)
CG (mg/mL)
CNC
CMC

FIG. 2

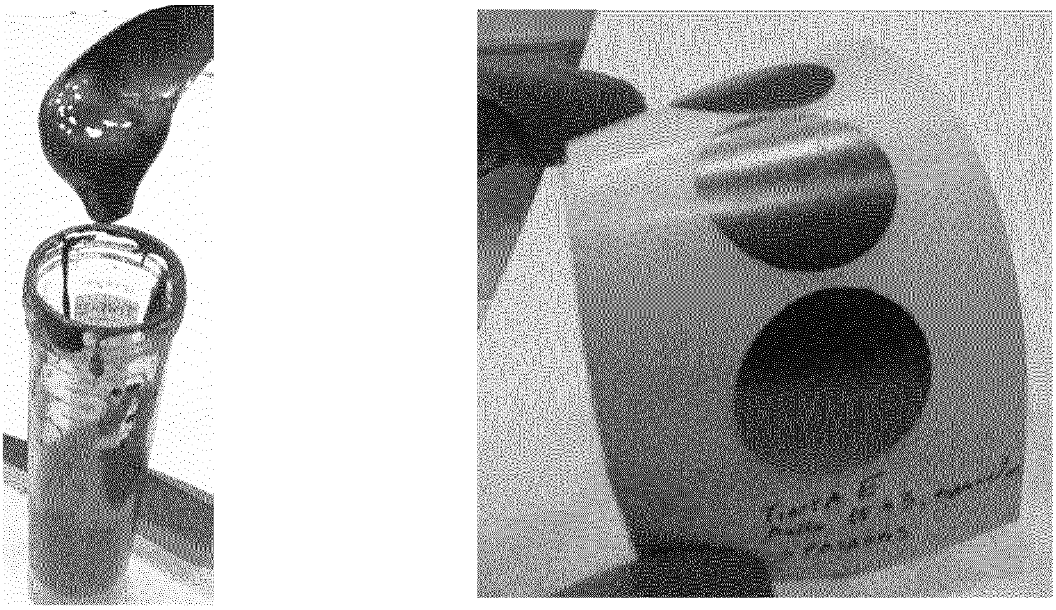

FIG. 3

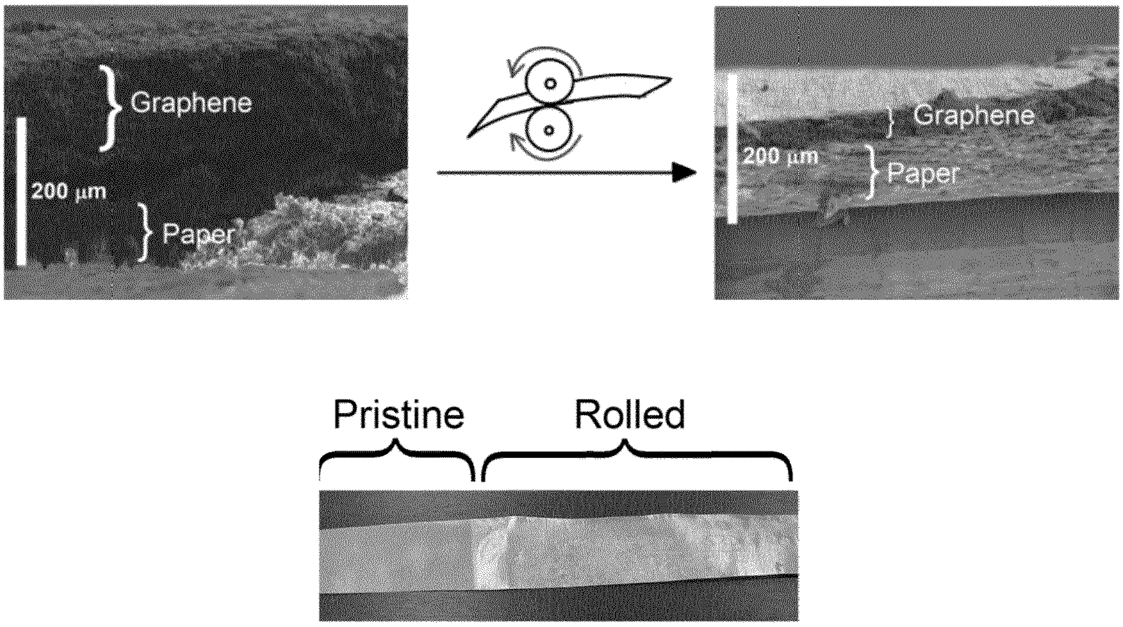
Graphene
200 µm
Paper
Graphene
200 µm
Paper
Pristine
Rolled

FIG. 4

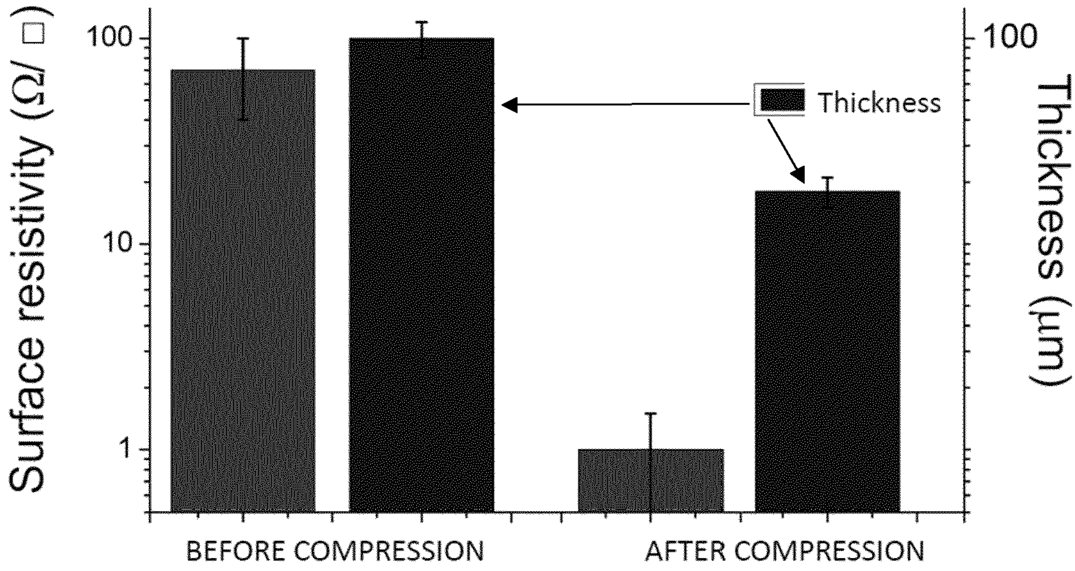
Surface resistivity (Ω/ □)
100
10
1
Thickness
100
Thickness (μm)
BEFORE COMPRESSION
AFTER COMPRESSION

FIG. 5

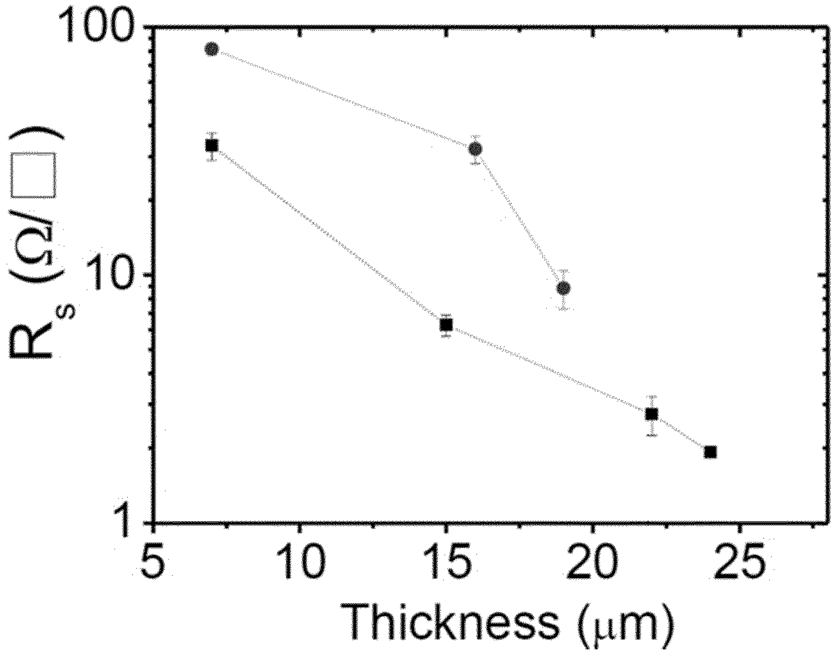
100
10
1
$R_s$ (Ω/□)
5
10
15
20
25
Thickness (μm)

FIG. 6

A)

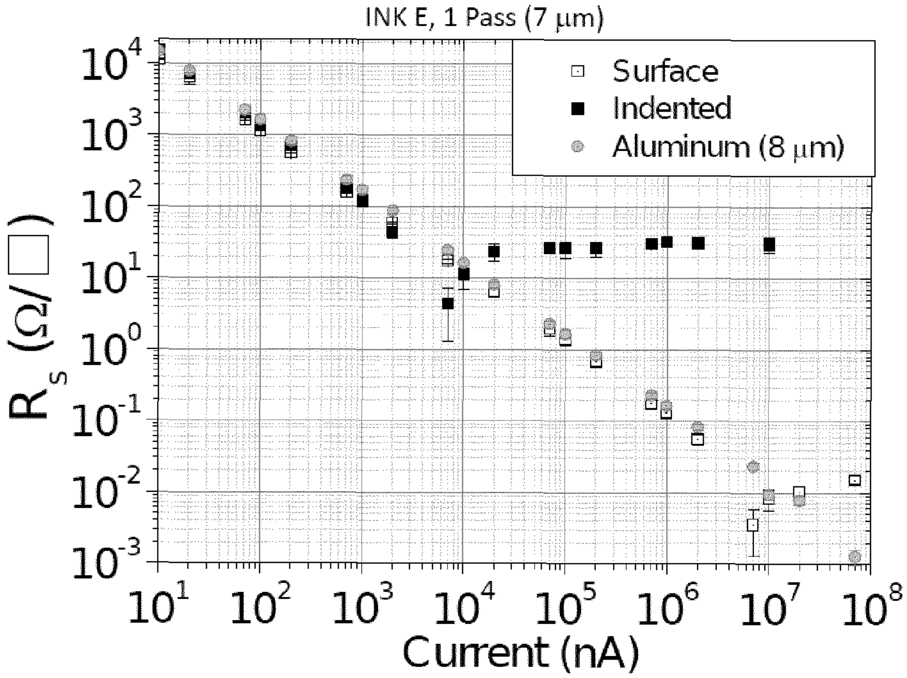
INK E, 1 Pass (7 μm)
Surface
Indented
Aluminum (8 μm)
$R_s$ (Ω/□)
$10^4$
$10^3$
$10^2$
$10^1$
$10^0$
$10^{-1}$
$10^{-2}$
$10^{-3}$
$10^1$ $10^2$ $10^3$ $10^4$ $10^5$ $10^6$ $10^7$ $10^8$
Current (nA)

B)

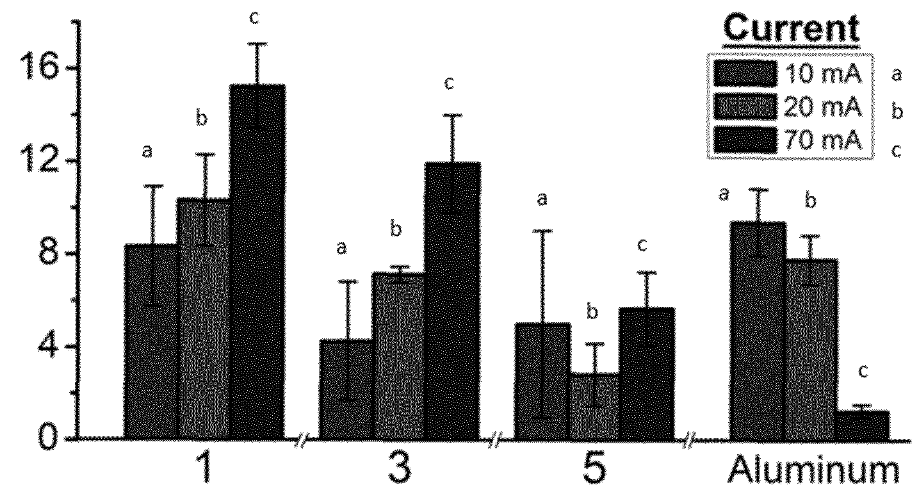
Current
10 mA a
20 mA b
70 mA c
16
12
8
4
0
1
3
5
Aluminum

FIG. 7

A)

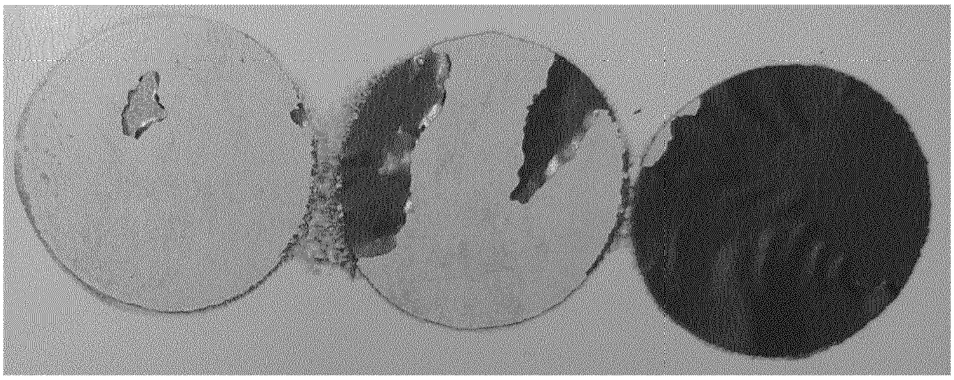

B)

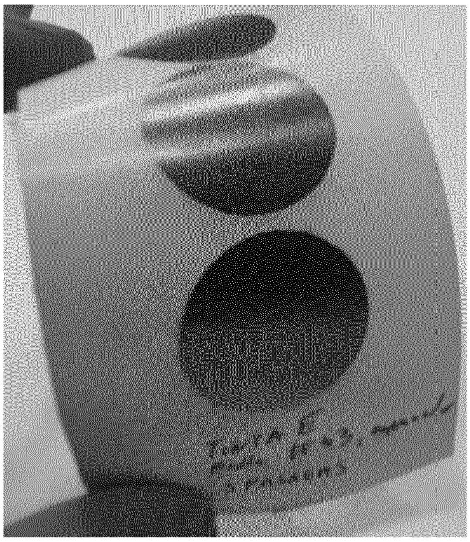


FIG. 8

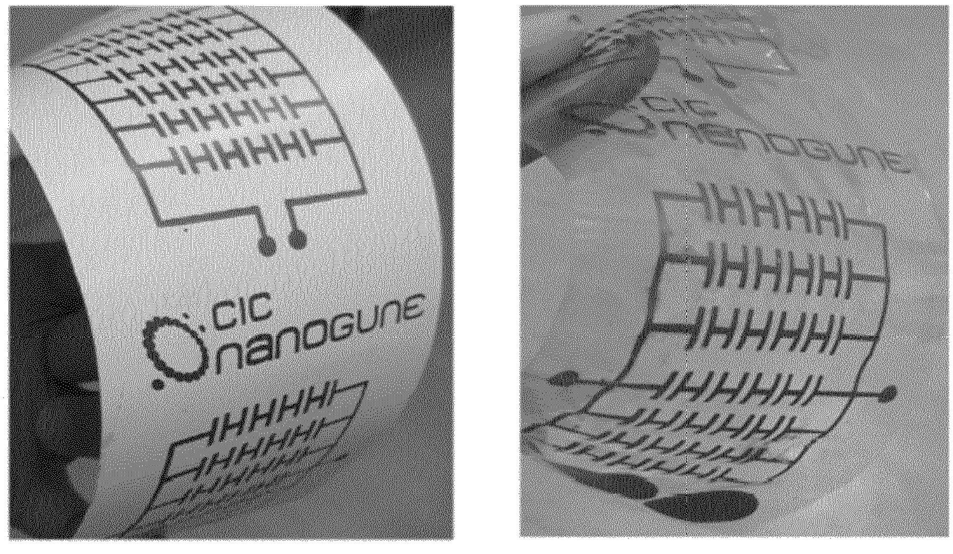


FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20150072162 A
- EP 2021054774 W


### Non-patent literature cited in the description


- *Carbon,* 2014, vol. 70, 157-163
- *Nanoscale,* 2017, vol. 9, 10219-10226
- **LIU.** *Composites,* 2021, 109250
- *Nanoscale,* 2019, vol. 11, 11719-11729
- **BARRUETABEÑA et al.** *Comm. Chem.,* 2019, vol. 2 (76), 10-11
- **ALONSO-LERMA et al.** *Commun. Mater.,* 2020, vol. 1, 57
- **LIN et al.** Preparation, properties and applications of polysaccharide nanocrystals in advanced functional nanomaterials: a review. *Nanoscale,* 2012, vol. 4, 3274-3294
- *CHEMICAL ABSTRACTS,* 1401-55-4
- **ALONSO-LERMA, B. ; BARANDIARAN, L ; UGARTE, L. et al.** High performance crystalline nanocellulose using an ancestral endoglucanase. *Commun Mater,* 2020, vol. 1 (57), 8
- *Composites Science and Technology,* 2014, vol. 92, 27-33
- *CHEMICAL ABSTRACTS,* 7782-42-5